# EUROPEAN PATENT SPECIFICATION

(11) **EP 3 808 958 B1**
(45) Date of publication and mention of the grant of the patent: **07.09.2022**
(21) Application number: 19834156.2
(22) Date of filing: 11.07.2019
(51) Int. Cl.: F02D 15/00, F02B 23/08, F02B 31/00, F02D 13/02, F02F 1/42, F02B 23/10, F02B 31/04, F02D 41/00

(54) **SPARK IGNITION TYPE ENGINE AND VEHICLE**
OTTOMOTOR UND FAHRZEUG
MOTEUR DE TYPE À ALLUMAGE PAR ÉTINCELLES ET VÉHICULE

(30) Priority: 12.07.2018 JP 2018132367
(43) Date of publication of application: 21.04.2021
(73) Proprietor: Yamaha Hatsudoki Kabushiki Kaisha, Iwata-shi, Shizuoka 438-8501 (JP)
(72) Inventor: TANOKURA, Hayato, Iwata-shi, Shizuoka 438-8501 (JP); NAGAI, Yoshitaka, Iwata-shi, Shizuoka 438-8501 (JP)
(74) Representative: Stöckeler, Ferdinand
(86) International application number: PCT/JP2019/027557
(87) International publication number: WO 2020/013290

(56) References cited:
- JP-A- 2008 095 510
- JP-A- 2008 215 126
- JP-A- 2009 103 037
- JP-A- 2013 209 914
- JP-A- 2013 227 966
- JP-B2- 6 241 988
- US-A1- 2014 165 959
- US-A1- 2016 040 614
- Anonymous: "Stroke ratio - Wikipedia", , 11 June 2018 (2018-06-11), pages 1-6, XP055819553, Retrieved from the Internet: URL:https://en.wikipedia.org/w/index.php?t itle=Stroke_ratio&oldid=845456001 [retrieved on 2021-06-30]

## Description

### Technical Field

The present teaching relates to a spark-ignition engine and a vehicle.

### Background Art

A spark ignition engine is already known in which combustion is ignited by a spark from an ignition plug.

Patent Literature (PTL) 1, for example, discloses a control device for an engine (an internal combustion engine). The engine disclosed in PTL 1 is a spark-ignition engine including two intake ports, two exhaust ports, and an ignition plug. The engine disclosed in PTL 1 creates a tumble flow in a cylinder. Furthermore, the engine disclosed in PTL 1 is an Atkinson-cycle (Miller-cycle) engine.

PTL 2, for example, discloses an intake system for an engine (an internal combustion engine). The engine disclosed in PTL 2 has three intake valves per cylinder. Of the three intake valves, a first intake valve located farthest from exhaust valves is closed near bottom dead center. Second and third intake valves disposed at opposite sides of the first intake valve are closed in a retardation area past the bottom dead center. The technique disclosed in PTL 2 is to inhibit an upward flow near the first intake valve flowing in a central region of a cylinder from escaping past the intake valve. Through the above, the technique disclosed in PTL 2 aims to improve combustion of an air-fuel mixture in the cylinder.

JP 2013 227966 A discloses an internal combustion engine configured to secure a large masking ratio of an intake valve port to easily generate tumbles of strong swirl, thereby improving combustion efficiency. In an internal combustion engine, an intake valve port is offset to have a crescent projecting part projected to the outside of a circular hole of a cylinder bore, as seen in a cylinder axis direction. A cut-out circular face is formed by cutting out a portion facing the projecting part of the intake valve port at an opening edge on a cylinder head side of the cylinder bore of a cylinder block, in a moving direction of an intake valve along a peripheral edge of a shade of the intake valve.

### Citation List

### Patent Literature

PTL 1: JP 2013 011248 A
PTL 2: JP 2009 264234 A

### Summary of Invention

### Technical Problem

It is desired to further improve the thermal efficiency of a spark-ignition engine.

An objective of the present teaching is to provide a spark-ignition engine that achieves an improved thermal efficiency.

### Solution to Problem

As described above, tumble flow is used to improve the thermal efficiency of a spark-ignition engine. Also, the Miller cycle has been proposed to improve the thermal efficiency of a spark-ignition engine.

However, applying the Miller cycle to a spark-ignition engine adopting the tumble flow tends to reduce effects of the tumble flow. It is therefore difficult to improve the thermal efficiency by applying the Miller cycle to a spark-ignition engine adopting the tumble flow.

In the internal combustion engine disclosed in PTL 1, for example, the closing timing of an intake valve is retarded in order to achieve the Miller cycle. That is, the intake valve is open even after gas intake. A portion of an upward flow in a combustion chamber therefore escapes from the combustion chamber and the airflow therein easily becomes attenuated. That is, the tumble flow easily becomes attenuated. In particular, escape of gas in a central portion of the tumble flow out of the combustion chamber tends to reduce the flow rate of the entire tumble flow and cause a flow disturbance.

In the Miller cycle operation of the internal combustion engine disclosed in PTL 1, the valve closing timing for one of the two intake ports is later than that of the other intake port. That is, only the closing timing of a specified valve is retarded.

However, the periphery of the valve having the retarded closing timing extends to the vicinity of the central portion of the tumble flow when viewed in a reciprocating direction of a piston part. Gas flowing in the central portion of the tumble flow therefore easily escapes through the port corresponding to the valve having the retarded closing timing. Consequently, the tumble flow easily becomes attenuated even though only the closing timing of the specified valve is retarded.

In the case of the engine disclosed in PTL 2, the first intake valve among the three intake valves is closed near the bottom dead center, and the second and third intake valves disposed at the opposite sides of the first intake valve are closed later.

With the second and third intake valves open, however, gas flowing around the first intake valve easily escapes from openings at the respective peripheries of the second and third intake valves through locations near the first intake valve. That is, gas flowing in a central region in a reciprocating direction of the piston part easily escapes past the second and third intake valves. The tumble flow easily becomes attenuated also in the engine disclosed in PTL 2.

The present inventors studied a method for reducing the attenuation of tumble flow even in a Miller-cycle engine.

In the course of studying the attenuation of tumble flow, the present inventors considered allowing themselves to provide a spark-ignition engine with only one intake valve.

The spark-ignition engine provided with one intake valve includes one single center tumble port (SCTP) for a tumble flow to be imparted to gas. By providing the single center tumble port (SCTP) for flowing gas to a combustion chamber with a separation enhancing part for causing the gas to flow separate away from the wall surface of the single center tumble port (SCTP), a fast tumble flow can be imparted to gas flown to the combustion chamber. A gas inlet on the single center tumble port (SCTP) may be disposed with an extending area that covers a gas outlet. The extending area is defined as an area having the same width as the gas inlet and extending from the gas inlet in an intake direction when viewed in a reciprocating direction of a piston part. It is therefore possible to dispose the gas inlet and the intake valve in positions corresponding to a central portion of the tumble flow when viewed in the reciprocating direction of the piston part.

The tumble flow imparted in the combustion chamber to the gas taken through the single center tumble port has a high flow rate in a central region of the combustion chamber viewed in the reciprocating direction of the piston part. The fast tumble flow is therefore easily maintained throughout the combustion chamber.

Furthermore, a central portion of an upward flow toward the gas inlet in the tumble flow imparted to gas taken into the combustion chamber through the single center tumble port (SCTP) hits the intake valve corresponding to the single center tumble port (SCTP). That is, the intake valve has a valve surface part disposed to block the central portion of the upward flow toward the gas inlet in the tumble flow. A portion of the upward flow toward the gas inlet escapes from the combustion chamber through an entire gap between the periphery of the valve and the gas inlet. However, the gas in the central portion of the upward flow hits the valve surface part and continues to flow along the valve surface part within the combustion chamber. That is, escape of the gas flowing in the central region of the combustion chamber viewed in the reciprocating direction of the piston part is reduced. The high flow rate is therefore easily maintained in the central region.

In comparison to a configuration including a plurality of gas inlets, for example, the aforementioned two-valve configuration has the gas inlet that is larger than each of the plurality of gas inlets. Accordingly, the valve surface part of the intake valve for closing the gas inlet is also large. A distance from an edge of the valve to a cylindrical wall surface of the combustion chamber on a center passing line passing through a center of the gas outlet and a center of the gas inlet when viewed in the reciprocating direction of the piston part in the two-valve configuration is shorter than in the configuration including the plurality of gas inlets, for example.

The upward flow toward the gas inlet flows along the cylindrical wall surface of a cylinder part when viewed in a direction along an axis around which the tumble flow whirls. Since the distance from the edge of the valve to the cylindrical wall surface of the combustion chamber is short as described above, the central portion of the upward flow toward the gas inlet directly hits the valve surface part before hitting a ceiling of the combustion chamber to change its direction. As a result, the gas is blocked from flowing out of the combustion chamber through the gas inlet. That is, escape of the gas creating the fast flow in the central portion is reduced. The high flow rate is therefore easily maintained in the central portion of the flow even if the closing of the gas inlet by the intake valve is later than arrival of the piston part at bottom dead center. This facilitates the maintenance of the fast tumble flow.

As described above, the present inventors found that it is possible to maintain a fast tumble flow even if the closing of the intake valve is retarded, by employing the two-valve configuration having one single center tumble port and one intake valve for the spark-ignition engine.

The present inventors also applied the spark-ignition engine having the two-valve configuration to a case where the closing of the gas inlet by the intake valve is earlier than the arrival of the piston part at the bottom dead center, which is referred to as early closing.

In the case of the early closing, the volume of gas to be taken into the combustion chamber decreases, and therefore the tumble flow imparted to gas in the combustion chamber tends to be slow.

However, in comparison to an engine including a plurality of gas inlets, for example, the spark-ignition engine having the two-valve configuration has the gas inlet that has a smaller area than a total area of the plurality of gas inlets. The gas therefore passes through the gas inlet on the single center tumble port at a high flow rate and a fast tumble flow is imparted to gas in the combustion chamber. As a result, the fast tumble flow is maintained in the combustion chamber even in the configuration in which the closing timing of the intake valve is earlier than the arrival of the piston part at the bottom dead center.

As described above, the present inventors found that it is possible to maintain a fast tumble flow even if the closing of the gas inlet is later or earlier than the arrival of the piston part at the bottom dead center, by allowing themselves to employ the two-valve configuration for the spark-ignition engine. As a result, the present inventors found that it is possible to improve the thermal efficiency by closing the gas inlet later or earlier than the arrival of the piston part at the bottom dead center, and thus allowing the spark-ignition engine to have an effective compression ratio smaller than an expansion ratio thereof, and that it is possible to improve the thermal efficiency by maintaining a fast tumble flow.

The spark-ignition engine according to aspects of the present teaching accomplished on the basis of the findings described above has the following configurations.

(1) A spark-ignition engine including:
a cylinder part including a combustion chamber;
a piston part disposed in the cylinder part in a reciprocable manner, the piston part and the cylinder part defining the combustion chamber;
a crankshaft coupled to the piston part, the crankshaft being rotatable in conjunction with a reciprocating motion of the piston part;
one exhaust port provided on the cylinder part and being in communication with the combustion chamber with a gas outlet therebetween;
one single center tumble port provided on the cylinder part and being in communication with the combustion chamber with a gas inlet therebetween, the single center tumble port having a separation enhancing part that causes gas being flown to the gas inlet to flow separate away from a wall surface thereof leading to the gas inlet so that a tumble flow tumbling about an axis that extends in a direction intersecting the reciprocating direction of the piston part is imparted to gas taken into the combustion chamber through the gas inlet, the gas inlet being disposed with an extending area that covers the gas outlet, the extending area being defined as an area having the same width as the gas inlet and extending from the gas inlet in a gas intake direction when viewed in the reciprocating direction of the piston part;
an offset ignition plug having an offset ignition part and configured to ignite the gas in the combustion chamber through spark ignition, the offset ignition part being disposed in a first region without overlapping a center passing line passing through a center of the gas outlet and a center of the gas inlet when viewed in the reciprocating direction, the first region being one of two regions defined by dividing the combustion chamber along the center passing line;
one exhaust valve that opens and closes the gas outlet; and
one intake valve that opens and closes the gas inlet disposed with the extending area that covers the gas outlet, the intake valve having a valve surface part that defines the combustion chamber together with the piston part and the cylinder part by closing the gas inlet, wherein
the intake valve opens the gas inlet when the piston part moves toward bottom dead center thereby to cause the tumble flow to be imparted to the gas taken through the single center tumble port into the combustion chamber via the separation enhancing part, and closes the gas inlet earlier or later than arrival of the piston part at the bottom dead center to allow the spark-ignition engine to have an effective compression ratio smaller than an expansion ratio thereof,
the separation enhancing part has a barb shape provided at least at a portion that is located in an annular region adjacent to the gas inlet within the wall surface forming the single center tumble port and that is located farthest from the gas outlet in a cross-section taken through the gas inlet and the gas outlet, the barb shape extending at a steep angle in a direction away from a central line of the single center tumble port and in a direction away from the gas outlet.

The spark-ignition engine described in (1) includes a cylinder part, a piston part, a crankshaft, one exhaust port, one single center tumble port, an offset ignition plug, one exhaust valve, and one intake valve. The cylinder part includes a combustion chamber. The piston part is disposed in the cylinder part in a reciprocable manner. The piston part and the cylinder part define the combustion chamber. The crankshaft is coupled to the piston part and is rotatable in conjunction with the reciprocating motion of the piston part.

The exhaust port and the single center tumble port (SCTP) are provided on the cylinder part. The exhaust port is in communication with the combustion chamber with a gas outlet therebetween. The single center tumble port is in communication with the combustion chamber with a gas inlet therebetween. The single center tumble port (SCTP) has a separation enhancing part. The separation enhancing part is configured to enhance separation of gas from the wall surface leading to the gas inlet. The separation enhancing part enhances separation of the gas from the wall surface so that a tumble flow is imparted to the gas taken into the combustion chamber. The gas inlet is disposed with the extending area, which extends from the gas inlet, covering the gas outlet. The extending area is defined as an area having the same width as the gas inlet and extending from the gas inlet in the intake direction when viewed in the reciprocating direction of the piston part. The offset ignition part is disposed in the first region, which is one of the two regions defined by dividing the combustion chamber along the center passing line, without overlapping the center passing line. The exhaust valve opens and closes the gas outlet. The intake valve opens and closes the gas inlet. The intake valve has the valve surface part that defines the combustion chamber together with the piston part and the cylinder part by closing the gas inlet. The intake valve allows gas to be taken into the combustion chamber through the single center tumble port while leaving the gas inlet open when the piston part moves toward the bottom dead center. A tumble flow is imparted to the gas taken into the combustion chamber through the single center tumble port.

According to the configuration described in (1), the gas passes through the single center tumble port (SCTP) when the piston part moves toward the bottom dead center in the combustion chamber. The separation enhancing part causes the gas to flow separate away from the wall surface leading to the gas inlet. The separation enhancing part causes the gas to flow separate away from the wall surface so that a tumble flow is imparted to gas in the cylinder part. Thus, a tumble flow is imparted in the cylinder part to the gas taken through the single center tumble port (SCTP).

The offset ignition part is disposed in the first region of the combustion chamber without overlapping the center passing line. It is therefore possible to employ a large gas inlet while reducing the influence of the placement of the offset ignition part. The gas having passed through the single center tumble port is taken into the combustion chamber through the gas inlet opened by the intake valve. And a tumble flow is imparted to the gas.

In comparison to an engine including a plurality of gas inlets, for example, the engine described in (1) includes the single center tumble port leading to the gas inlet, and the gas inlet has a smaller area than a total area of the plurality of gas inlets. The flow rate of gas passing through an opening increases with a decrease in area of the opening. Therefore, a fast tumble flow is imparted to the gas passing through the gas inlet on the single center tumble port in the combustion chamber.

Furthermore, the gas inlet on the single center tumble port is disposed with the extending area, which extends from the gas inlet, covering the gas outlet when viewed in the reciprocating direction of the piston part. The tumble flow imparted in the combustion chamber to the gas taken through the single center tumble port therefore has a high-flow rate component in the central region of the combustion chamber viewed in the reciprocating direction. The fast tumble flow is therefore easily maintained throughout the combustion chamber.

The gas inlet closing timing of the intake valve is earlier or later than the arrival of the piston part at the bottom dead center. Thus, the combustion chamber provides an effective compression ratio smaller than an expansion ratio. That is, the spark-ignition engine described in (1) operates in a Miller cycle, and thus achieves a high thermal efficiency.

In a configuration in which the closing of the gas inlet by the intake valve is later than the arrival of the piston part at the bottom dead center, for example, the intake valve keeps the gas inlet open even after the piston part has arrived at the bottom dead center. A portion of the gas in the combustion chamber therefore escapes through the gas inlet to the single center tumble port.

The gas inlet is disposed with the extending area that covers the gas outlet. The extending area is an area having the same width as the gas inlet and extending from the gas inlet in the intake direction when viewed in the reciprocating direction of the piston part. Of the tumble flow imparted to gas in the combustion chamber, therefore, a portion flowing in a direction opposite to the piston part flows toward the gas inlet. The valve surface part of the intake valve is disposed in the position of the gas inlet. The valve surface part of the intake valve is disposed so as to block a portion, of the tumble flow, flowing toward the gas inlet by being pushed by the piston part. The flow toward the gas inlet directly hits the valve surface part of the intake valve, and then flows along the valve surface part of the intake valve. Thus, escape of the gas through the gas inlet is reduced. As a result, the flow rate is high in the central region of the combustion chamber viewed in the reciprocating direction.

The diameter of the valve surface part corresponds to the large gas inlet on the single center tumble port and is therefore large. In this configuration, a distance from an edge of the valve surface part that overlaps the center line to an edge of a ceiling part of the combustion chamber when viewed in the reciprocating direction is shorter than the distance in a configuration including a plurality of gas inlets, for example. The gas flowing along the cylindrical wall surface tends to hit the valve surface part of the intake valve without hitting the ceiling part of the combustion chamber and thus changing its direction. Thus, escape of the gas in the central portion of the flow out of the combustion chamber through the gas inlet is reduced. The fast flow is therefore easily maintained in the central region of the combustion chamber viewed in the reciprocating direction. This facilitates the maintenance of the fast tumble flow.

As described above, the fast flow is easily maintained in the central region of the combustion chamber viewed in the reciprocating direction even if the closing of the gas inlet by the intake valve is later than the arrival of the piston part at the bottom dead center. This consequently reduces time required for gas combustion. Thus, the thermal efficiency improves.

In contrast to the configuration described above, the volume of gas to be taken into the combustion chamber decreases in a configuration in which the closing timing of the intake valve is earlier than the arrival of the piston part at the bottom dead center. The tumble flow in the combustion chamber therefore tends to be weak.

However, in comparison to an engine including a plurality of gas inlets, for example, the spark-ignition engine described in (1) includes the single center tumble port leading to the gas inlet, and the gas inlet has a smaller area than a total area of the plurality of gas inlets. On an intake stroke, therefore, a fast tumble flow is imparted to the gas passing through the gas inlet on the single center tumble port at a high flow rate in the combustion chamber. As a result, the spark-ignition engine described in (1) maintains the fast tumble flow in the combustion chamber even if the closing timing of the intake valve is earlier than the arrival of the piston part at the bottom dead center, and therefore the time required for gas combustion is reduced. Thus, the thermal efficiency improves.

As described above, the spark-ignition engine described in (1) achieves an improved thermal efficiency, because the fast tumble flow is maintained in the combustion chamber even if the gas inlet is closed later or earlier than the arrival of the piston part at the bottom dead center in order to improve the thermal efficiency through the combustion chamber providing an effective compression ratio smaller than an expansion ratio. Thus, it is possible to improve the thermal efficiency of the spark-ignition engine.

Note that the Miller cycle herein does not necessarily need the use of, for example, a turbocharger or a supercharger. The same is true of the Atkinson cycle.

(2) The spark-ignition engine described in (1), wherein
the cylinder part includes a cylinder head portion provided with the exhaust port and the single center tumble port and forming a ceiling part of the combustion chamber, and a cylinder body portion accommodating the piston part, and
of the ceiling part, at least a peripheral portion leading to the cylinder body portion has a non-squish area in an area defined by supposing that the extending area extends from the gas inlet in a direction opposite to the gas intake direction when viewed in the reciprocating direction of the piston part, the non-squish area being provided with no projecting part projecting toward the combustion chamber.

According to the configuration described in (2), the tumble flow is imparted to the gas in the combustion chamber. A part of the gas is pushed by the piston part toward the gas inlet. A portion of the part flows around the center line. The portion flows near the non-squish area. The tumble flow is prevented from being blocked near the gas inlet by a squish flow caused by a projecting part. The high flow rate of the tumble flow is therefore easily maintained in the central region of the combustion chamber viewed in the reciprocating direction. As a result, the tumble flow is easily maintained throughout the combustion chamber. It is therefore possible to further improve the thermal efficiency of the spark-ignition engine.

(3) The spark-ignition engine described in (1) or (2), wherein
the intake valve is configured to close the gas inlet later than the arrival of the piston part at the bottom dead center.

According to the configuration described in (3), in which the closing of the gas inlet by the intake valve is later than the arrival of the piston part at the bottom dead center, the intake valve keeps the gas inlet open even after the piston part has arrived at the bottom dead center. A portion of the gas in the combustion chamber therefore escapes through the gas inlet to the single center tumble port. Even in this case, a portion of the tumble flow that flows toward the gas inlet directly hits the valve surface part of the intake valve, and thus escape of the gas through the gas inlet is reduced. As a result, the flow rate is high in the central region of the combustion chamber viewed in the reciprocating direction.

The fast tumble flow is maintained in the combustion chamber, and thus the thermal efficiency improves even if the gas inlet is closed later than the arrival of the piston part at the bottom dead center in order to improve the thermal efficiency through the Miller cycle. The spark-ignition engine therefore achieves an improved thermal efficiency. Note that according to the configuration described in (3), the intake valve closes the gas inlet when the piston part moves from the bottom dead center (intake bottom dead center) toward top dead center (compression top dead center).

(4) The spark-ignition engine described in (3), wherein
the cylinder part has a plug hole formed to expose the offset ignition part to the inside of the combustion chamber, and
the valve surface part of the intake valve is configured such that an end point on the valve surface part is closer to the gas outlet than an end point on a plug hole in a direction parallel with the center passing line when viewed in the reciprocating direction, the plug hole formed to expose the offset ignition part to the inside of the combustion chamber, the end point on the valve surface part being the closest point to the gas outlet thereon in said direction when the gas inlet is closed, the end point on the plug hole being the closest point to the gas inlet thereon in said direction.

According to the configuration described in (4), the offset ignition part is offset from the center passing line without overlapping the center passing line. The end point on the valve surface part that is close to the gas outlet is closer to the gas outlet than the end point on the plug hole for the offset ignition part that is close to the gas inlet in the direction parallel with the center passing line. That is, the valve surface part is large. Consequently, escape of the gas flowing around the central line and creating the fast flow out of the combustion chamber through the gas inlet is effectively reduced. The fast flow is therefore easily maintained in the central region of the combustion chamber viewed in the reciprocating direction. It is therefore possible to further improve the thermal efficiency.

(5) The spark-ignition engine described in (1) or (2), wherein
the intake valve is configured to close the gas inlet earlier than the arrival of the piston part at the bottom dead center.

According to the configuration described in (5), the volume of gas to be taken into the combustion chamber decreases, because the closing timing of the intake valve is earlier than the arrival of the piston part at the bottom dead center. However, in comparison to an engine including a plurality of gas inlets, for example, the engine described in (5) includes the single center tumble port leading to the gas inlet, and the gas inlet has a smaller area than a total area of the plurality of gas inlets. The gas therefore passes through the gas inlet on the single center tumble port at a high flow rate and a fast tumble flow is imparted to the gas in the combustion chamber. According to the configuration described in (5), the Miller cycle in which the closing timing of the intake valve is earlier than the arrival of the piston part at the bottom dead center allows the operation to achieve an improved thermal efficiency. Furthermore, since the fast tumble flow is maintained in the combustion chamber, the time required for gas combustion is reduced. It is therefore possible to further improve the thermal efficiency. Note that according to the configuration described in (5), the intake valve closes the gas inlet when the piston part moves from the top dead center (exhaust top dead center) toward the bottom dead center (intake bottom dead center).

(6) The spark-ignition engine described in any one of (1) to (5), wherein
the combustion chamber has a diameter shorter than a stroke length of the reciprocating motion of the piston part when viewed in the reciprocating direction.

According to the configuration described in (6), a tumble flow is imparted to the gas taken through the single center tumble port (SCTP) when the piston part moves toward the bottom dead center. Since the stroke by which the piston part moves is longer than the diameter of the combustion chamber, the piston part moves at a high speed. Furthermore, the tumble flow is strengthened or maintained as a result of the gas being pushed by the piston part and flowing toward the top dead center of the piston part in the combustion chamber when the piston part moves toward the top dead center. Since the stroke by which the piston part moves is longer than the diameter of the combustion chamber, the piston part moves at a high speed. Since the piston part that moves at a high speed pushes back the gas, the fast tumble flow is easily maintained.

Since the Miller cycle in which the closing timing of the intake valve is earlier than the arrival of the piston part at the bottom dead center allows the operation to achieve an improved thermal efficiency, and the fast tumble flow is maintained in the combustion chamber, the time required for gas combustion is reduced. It is therefore possible to further improve the thermal efficiency.

(7) The spark-ignition engine described in any one of (1) to (6), wherein
the cylinder part has a stroke volume of greater than or equal to 0.1 L and less than 0.2 L.

The spark-ignition engine described in (7) has a simple configuration including one exhaust valve and the single center tumble port functioning as one intake valve. It is therefore possible to improve the thermal efficiency of the small engine having a stroke volume of greater than or equal to 0.1 L and less than 0.2 L through the Miller cycle and the maintenance of the fast tumble flow while avoiding an increase in size of the engine.

(8) A vehicle including:
the spark-ignition engine described in any one of (1) to (7); and
a vehicle wheel that is driven by the spark-ignition engine.

The vehicle described in (8) includes the spark-ignition engine described in any one of (1) to (7). It is therefore possible to maintain the fast tumble flow in the combustion chamber even if the combustion chamber provides an effective compression ratio smaller than an expansion ratio. As a result of an improvement in thermal efficiency of the engine, the fuel economy of the vehicle improves.

The single center tumble port (SCTP) is a channel of gas to be supplied to the combustion chamber and has a function of a tumble port. The function of a tumble port is to cause a tumble flow (a longitudinal vortex flow) to be imparted to gas taken into the combustion chamber. The single center tumble port (SCTP) has a wall surface having a shape that causes the gas being taken to flow into the combustion chamber so that a tumble flow is imparted to gas taken in the combustion chamber. The single center tumble port (SCTP) has a structure for a tumble flow to be imparted to gas, on the cylindrical wall surface leading to the gas inlet on the single center tumble port (SCTP). The structure for a tumble flow to be imparted by gas causes, for example, the gas flow to flow separate away from a farthest portion of the wall surface, which is a portion located farthest from the gas outlet. The structure for a tumble flow to be imparted to gas has, for example, a protrusion on the farthest portion of the wall surface. The structure for a tumble flow to be imparted to gas is not limited as such and may have, for example, a bulging part provided on a portion upstream of the farthest portion of the wall surface in terms of the gas flow and bulging toward the outside of the port. The cylinder part having the single center tumble port (SCTP) uses the piston part moving by a long stroke to draw the gas from the only one relatively large tumble port into a cylinder bore. This makes it possible for a fast tumble flow to be imparted to gas.

In the cylinder part, for example, the stroke is longer than a diameter of the bore. A ratio of the stroke to the diameter of the bore is, for example, greater than or equal to 1.2.

The single center tumble port (SCTP) may have, for example, a configuration satisfying at least one of (i), (ii), or (iii).
(i) The single center tumble port (SCTP) may be provided with a gas inlet formed such that a distance between the gas inlet and the gas outlet along the center passing line passing through the center of the gas inlet and the center of the gas outlet is shorter than a diameter of the offset ignition part. Since the offset ignition part is offset from the center passing line, the gas inlet is able to have a large diameter.
(ii) The single center tumble port (SCTP) may be provided with a gas inlet formed such that a center (i.e., a point through which the central line of the piston part extends) of the cylinder bore is located within the gas inlet when viewed in the reciprocating direction of the piston part.
(iii) The single center tumble port (SCTP) may be provided with a gas inlet formed such that in a range of the center passing line within a region including the gas inlet viewed in the reciprocating direction of the piston part, a portion where the center passing line and the gas inlet overlap is longer than a portion where the center passing line and the gas inlet do not overlap. This allows the gas inlet to be wide with respect to the diameter of the cylinder bore. Furthermore, the diameter of the gas inlet may be longer than the range of the center passing line within the region including the gas inlet. This allows the gas inlet to be wider with respect to the diameter of the cylinder bore. Note that the region including the gas inlet refers to a region that is one of two regions defined by dividing the combustion chamber along a straight line intersecting with a center passing line at a right angle and passing through the center of the cylinder bore when viewed in the reciprocating direction of the piston part and that mainly includes the gas inlet. The center passing line refers to a straight line extending in parallel with the aforementioned center passing line and passing through the center of the cylinder bore when viewed in the reciprocating direction of the piston part. The center passing line may overlap the aforementioned center passing line.

As a result of the gas being supplied into the cylinder part through the single center tumble port (SCTP) provided with the large gas inlet as described above, it is possible for a faster tumble flow to be imparted to gas in the combustion chamber. The single center tumble port (SCTP) may have, for example, a configuration satisfying any of the following:
- All of the above-described requirements (i) to (iii);
- The above-described requirements (i) and (ii);
- The above-described requirements (ii) and (iii);
- The above-described requirements (i) and (iii);
- The above-described requirement (i);
- The above-described requirement (ii); or
- The above-described requirement (iii).

A port as in the single center tumble port (SCTP) and the exhaust port used herein refers to a gas channel formed on the cylinder part. By contrast, the gas inlet is an opening for drawing the gas, and the gas outlet is an opening for discharging the gas. The gas inlet is equivalent to an interface between the single center tumble port (SCTP) and the combustion chamber. The gas outlet is equivalent to an interface between the exhaust port and the combustion chamber.

The combustion chamber is a space defined by the piston part and the cylinder part. The combustion chamber may have a dimeter longer than the stroke of the reciprocating motion of the piston part.

The tumble flow is a vortex whirling around an axis extending in a direction intersecting with the reciprocating direction of the piston part. A tumble flow imparted to the gas in the combustion chamber may create a vortex other than the tumble flow. For example, the gas in the combustion chamber may create a swirling flow, which whirls around an axis extending in the reciprocating direction of the piston part, in addition to the tumble flow.

In an upper portion (a portion toward the cylinder head) of the combustion chamber, the tumble flow flows from the gas inlet toward the gas outlet. However, while the tumble flow to be imparted to gas, the gas in the combustion chamber may include, for example, a flow in a direction opposite to the flow from the gas inlet toward the gas outlet in the upper portion of the combustion chamber.

The piston part and the combustion chamber each have a circular shape when viewed in the reciprocating direction. However, at least one of the piston part and the combustion chamber may have, for example, an oval shape when viewed in the reciprocating direction.

The separation enhancing part has a structure that causes the gas being flown to the gas inlet to flow separate away from the wall surface leading to the gas inlet so that a tumble flow is imparted to gas taken into the combustion chamber through the gas inlet. The separation enhancing part is, for example, a protruding part protruding toward the internal space of the single center tumble port (SCTP). The protruding part may have an edge. Furthermore, the protruding part may be located adjacent to a recessed part for accentuating the protruding part. Furthermore, the separation enhancing part is not limited to a single protruding part and may be, for example, dimples, that is a plurality of fine depressions formed in the wall surface.

The extending area is defined as an area having the same width as the gas inlet and extending from the gas inlet in the intake direction when viewed in the reciprocating direction of the piston part. The intake direction is equivalent to a direction of a straight line being an extension of the central line of the single center tumble port (SCTP) from the gas inlet. The gas inlet has a width to the largest extent possible in a direction perpendicular to the intake direction. The extending area covers, for example, a center of a top face of the piston part when viewed in the reciprocating direction of the piston part.

The center passing line is a straight line passing through the center of the gas outlet and the center of the gas inlet when viewed in the reciprocating direction of the piston part.

The non-squish area is an area provided with no projecting part projecting toward the combustion chamber. More specifically, the non-squish area is an area provided with no edged projecting part projecting toward the combustion chamber. That is, the projecting part has an edge. The non-squish area is, for example, a plane that leads to the edge and that is substantially parallel with a peripheral portion of the top face of the piston part. However, the plane that leads to the edge may be, for example, non-parallel with the peripheral portion of the top face of the piston part.

The spark-ignition engine includes, for example, one ignition plug serving as the offset ignition plug. However, the spark-ignition engine is not limited as such and may include, for example, two or more offset ignition plugs.

The spark-ignition engine is, for example, a four-stroke engine. However, the spark-ignition engine is not limited as such and may be, for example, a six-stroke engine or an eight-stroke engine.

The stroke of the reciprocating motion of the piston part in the spark-ignition engine is not limited to being longer than the diameter of the combustion chamber and may be shorter than or equal to the diameter of the combustion chamber.

The vehicle includes, for example, vehicle wheels in addition to the engine. The vehicle wheels include a drive wheel that is rotated by receiving power outputted from the engine. No particular limitations are placed on the number of vehicle wheels. No particular limitations are placed on the vehicle, and examples thereof include a four-wheel automobile and a straddled vehicle. For instance, the four-wheel automobile has a cabin. The straddled vehicle means a type of vehicle in which a driver strides a saddle when seated. Examples of the straddled vehicle include motorcycles, motor tricycles, and ATVs (All-Terrain Vehicles).

The terminology used herein is for defining particular embodiments only, and is not intended to limit the scope of the invention as defined by the claims.

This description describes a novel spark-ignition engine. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

### Advantageous Effects of Invention

According to the present teaching, it is possible to provide a spark-ignition engine that achieves an improved thermal efficiency.

### Brief Description of Drawings

[FIG. 1(A)] A perspective view of the inside of a spark-ignition engine according to a first embodiment of the present teaching in a reciprocating direction of a piston part for explaining the spark-ignition engine.
[FIG. 1(B)] A side cross-sectional view illustrating an outline configuration of the spark-ignition engine.
[FIG. 1(C)] A graph for explaining a valve timing of the spark-ignition engine.
[FIG. 2] A front cross-sectional view of the spark-ignition engine illustrated in FIGS. 1(A) to 1(B).
[FIG. 3] A perspective view illustrating the piston part of the spark-ignition engine illustrated in FIGS. 1(A) to 1(C).
[FIG. 4] An enlarged view of the inside of the spark-ignition engine illustrated in FIG. 1(A).
[FIG. 5(A)] An enlarged cross-sectional view of a single center tumble port (SCTP) and a portion therearound of the spark-ignition engine illustrated in FIGS. 1(A) to 1(C).
[FIG. 5(B)] A cross-sectional view for only illustrating the single center tumble port (SCTP) for visual clarity.
[FIG. 6 (A)] A plan view of an intake stroke for schematically illustrating a flow of a gas mixture in a combustion chamber of the spark-ignition engine illustrated in FIGS. 1(A) to 1(C).
[FIG. 6 (B)] A perspective view of the intake stroke.
[FIG. 6(C)] A plan view of a compression stroke.
[FIG. 6 (D)] A perspective view of the compression stroke.
[FIG. 7] A diagram for explaining a method for calculating a tumble ratio.
[FIG. 8] A plan view for explaining escape of gas in a four-valve spark-ignition engine being a comparative example on a compression stroke.
[FIG. 9] A graph showing a relationship between the diameter of a combustion chamber and the thermal efficiency of a spark-ignition engine.
[FIG. 10] A graph showing a relationship between the stroke volume and the thermal efficiency of spark-ignition engines.
[FIG. 11] A graph showing a relationship between the stroke volume and the indicated thermal efficiency of a generic engine.
[FIG. 12] A diagram for explaining a gas flow in the spark-ignition engine illustrated in FIGS. 1(A) to 10.
[FIG. 13(A)] A diagram illustrating a modification example of a port in the spark-ignition engine.
[FIG. 13(B)] A diagram illustrating another modification example of the port in the spark-ignition engine.
[FIG. 14] A diagram for explaining a gas flow in a comparative example.
[FIG. 15] A graph showing tumble ratios in a configuration illustrated in FIG. 12, a configuration illustrated in FIGS. 13(A) and 13(B), and a configuration illustrated in FIG. 14, respectively.
[FIG. 16] A graph for explaining operation of a spark-ignition engine according to a modification example of the first embodiment.
[FIG. 17] A side view illustrating a straddled vehicle with the spark-ignition engine illustrated in FIGS. 1(A) to 1(C) mounted therein.
[FIG. 18] A diagram for schematically illustrating placement of an engine unit in the vehicle illustrated in FIG. 17.
[FIG. 19] A side view illustrating a straddled vehicle of different type from that illustrated in FIG. 17.
[FIG. 20] A diagram for schematically illustrating placement of an engine unit in the vehicle illustrated in FIG. 19.
[FIG. 21] A diagram for schematically illustrating placement of another engine unit differing from that illustrated in FIG. 20.

### Description of Embodiments

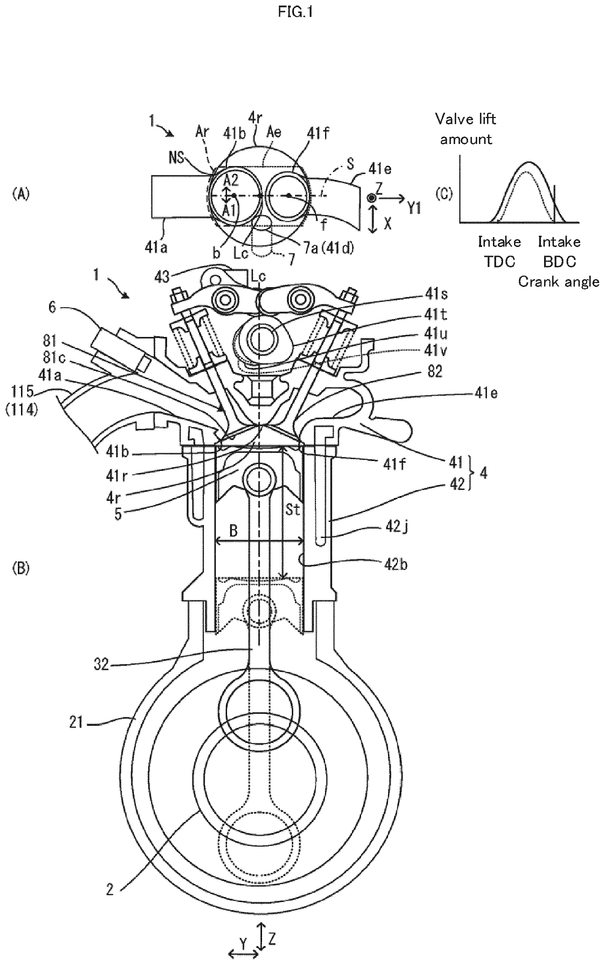

FIGS. 1(A) to 1(C) are diagrams for explaining a spark-ignition engine according to a first embodiment of the present teaching. FIG. 1(A) is a perspective view of the inside of the spark-ignition engine in a reciprocating direction of a piston part, FIG. 1(B) is a side cross-sectional view, and FIG. 1(C) is a graph for explaining a valve timing of the spark-ignition engine.

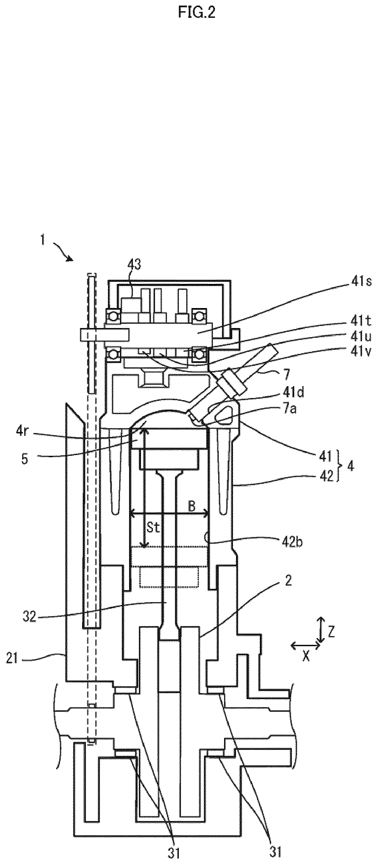

FIG. 2 is a front cross-sectional view of the spark-ignition engine illustrated in FIGS. 1(A) to 1(B).

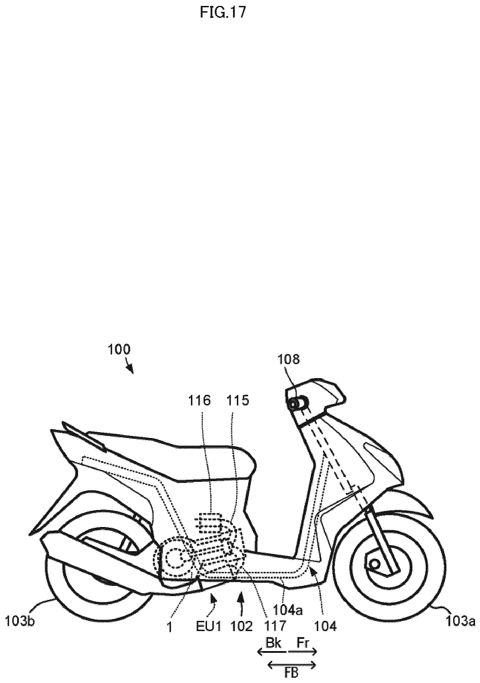

A spark-ignition engine 1 (also referred to below simply as an engine 1) illustrated in FIGS. 1(A) to 2 is, for example, mounted in a straddled vehicle 100 illustrated in FIG. 17.

The spark-ignition engine 1 is a single-cylinder engine. The spark-ignition engine 1 includes a crankshaft 2, a crank case part 21, a cylinder part 4, a piston part 5, a fuel injector part 6, an offset ignition part 7a (an offset ignition plug 7), an intake valve 81, and an exhaust valve 82. The spark-ignition engine 1 is a single-cylinder engine. The spark-ignition engine 1 has a single cylinder part 4.

The cylinder part 4 includes a combustion chamber 4r. The cylinder part 4 includes a cylinder head portion 41 and a cylinder body portion 42. The crank case part 21, the cylinder body portion 42, and the cylinder head portion 41 are stacked on one another in the stated order and are fastened to one another.

The inside of the cylinder body portion has a cylinder bore 42b. The cylinder bore 42b is an internal space of the cylinder body portion 42. The spark-ignition engine 1 is a water-cooled engine. The cylinder body portion 42 includes a coolant pathway 42j.

The cylinder head portion 41 forms a ceiling part 41r of the combustion chamber 4r.

The piston part 5 is accommodated in the cylinder bore 42b. The piston part 5 is disposed in a reciprocable manner. A direction of the reciprocation of the piston part 5 is referred to as a reciprocating direction Z. The piston part 5 reciprocates between top dead center represented by solid lines in FIG. 1(B) and bottom dead center represented by dashed lines in FIG. 1(B). The piston part 5 and the cylinder part 4 define the combustion chamber 4r. More specifically, the piston part 5, the cylinder part 4, the intake valve 81, and the exhaust valve 82 define the combustion chamber 4r.

The cylinder part 4 has, for example, a stroke volume of greater than or equal to 0.1 L and less than 0.2 L. The spark-ignition engine 1 is a naturally aspirated engine. The spark-ignition engine 1 performs gas intake without a supercharger.

The combustion chamber 4r has a diameter B shorter than a stroke St of the reciprocating motion of the piston part 5 when viewed in the reciprocating direction Z. That is, the stroke St of the reciprocating motion of the piston part 5 is longer than the diameter B of the combustion chamber 4r. A ratio of the stroke St to the diameter B is, for example, greater than or equal to 1.2. The ratio of the stroke St to the diameter B may be, for example, greater than or equal to 1.3. Alternatively, the ratio of the stroke St to the diameter B is, for example, greater than or equal to 1.5.

The spark-ignition engine 1 is set to a higher effective compression ratio than conventional engines. It is possible for the spark-ignition engine 1 to have a higher effective compression ratio than conventional engines while reducing the occurrence of knocking. This also improves the thermal efficiency of the spark-ignition engine 1.

The maximum output rotational speed of the spark-ignition engine 1 is set to less than 6000 rpm. The maximum output rotational speed is a rotational speed at which the maximum output is obtained. While the stroke St of the spark-ignition engine 1 is large, the maximum speed at which the piston part 5 moves is restricted to a certain level through the maximum output rotational speed being restricted to less than 6000 rpm.

The diameter B of the combustion chamber 4r in the spark-ignition engine 1 is, for example, set to a range of 40 mm to 60 mm. The stroke St is set between 70 mm and 80 mm.

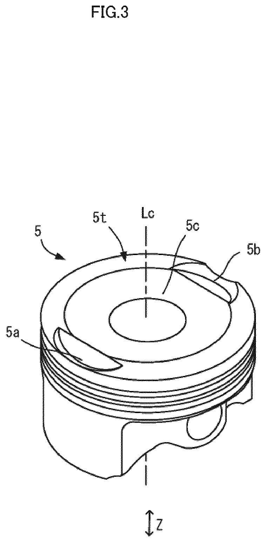

FIG. 3 is a perspective view illustrating the piston part of the spark-ignition engine illustrated in FIGS. 1(A) to 1(C).

The piston part 5 has a recessed portion 5c, which is lower than the surrounding area, in a top face 5t of the piston part 5. The recessed portion 5c has a circular shape when viewed in the reciprocating direction Z. The circular shape of the recessed portion 5c is centered at a central line Lc of the piston part 5 when viewed in the reciprocating direction Z.

Note that according to the present embodiment, a center of the piston part 5 and a center of the combustion chamber 4r coincide with each other when viewed in the reciprocating direction Z. Furthermore, the center of the piston part 5 and the center of the combustion chamber 4r are on the central line Lc when viewed in the reciprocating direction Z. Accordingly, the center of the piston part 5, the center of the combustion chamber 4r, and the central line are given the same reference sign Lc when viewed in the reciprocating direction Z.

The top face 5t of the piston part 5 also has valve recesses 5a and 5b for avoiding interference from the intake valve 81 and the exhaust valve 82. The valve recesses 5a and 5b are adjacent to the recessed portion 5c. The valve recesses 5a and 5b receive a portion of the intake valve 81 and a portion of the exhaust valve 82. The recessed portion 5c is separate from the valve recesses 5a and 5b and does not receive the intake valve 81 or the exhaust valve 82.

The crankshaft 2 illustrated in FIGS. 1(A) to 2 is supported by the crank case part 21 with bearings 31 (see FIG. 2) therebetween. The crankshaft 2 is coupled to the piston part 5 and is rotatable in conjunction with the reciprocating motion of the piston part 5. The crankshaft 2 is coupled to the piston part 5 with a connecting rod 32 therebetween. One end of the connecting rod 32 is rotatably supported on the crankshaft 2, and the other end of the connecting rod 32 is rotatably supported on the piston part 5.

An extending direction of the crankshaft 2 is referred to as a crankshaft direction X. A direction Y intersecting with both the crankshaft direction X and the reciprocating direction Z is also shown in the drawings.

The spark-ignition engine 1 includes only one single center tumble port (SCTP) 41a and only one exhaust port 41e. The single center tumble port (SCTP) 41a functions as an intake port. The single center tumble port (SCTP) 41a and the exhaust port 41e are formed on the cylinder part 4. Specifically, the single center tumble port (SCTP) 41a and the exhaust port 41e are formed on the cylinder head portion 41. Each of the single center tumble port (SCTP) 41a and the exhaust port 41e leads to the combustion chamber 4r. The cylinder head portion 41 has a gas inlet 41b and a gas outlet 41f. The gas inlet 41b is an opening part in the combustion chamber 4r for the single center tumble port (SCTP) 41a. The gas outlet 41f is an opening part in the combustion chamber 4r for the exhaust port 41e. Gas passing through the single center tumble port (SCTP) 41a is supplied to the combustion chamber 4r through the gas inlet 41b. The gas inlet 41b is larger than the gas outlet 41f in the spark-ignition engine 1. The gas inlet 41b is formed such that a center (i.e., a point through which the central line Lc of the piston part 5 extends) of the cylinder bore 42b is located within the gas inlet 41b when viewed in the reciprocating direction Z of the piston part.

The single center tumble port (SCTP) 41a is in communication with the combustion chamber 4r with the gas inlet 41b therebetween. The single center tumble port (SCTP) 41a has a structure that causes a tumble flow imparted to gas taken into the combustion chamber 4r through the gas inlet 41b. The tumble flow in the combustion chamber 4r is a flow whirling around an axis extending in a direction intersecting with the reciprocating direction Z. Details of the structure for a tumble flow to be imparted to gas will be described below.

An end (an upstream end) of the single center tumble port (SCTP) 41a, which is opposite to an end thereof adjacent to the gas inlet 41b, is open to an outer surface of the cylinder head portion 41. An intake channel 115 is connected to an end (an upstream end) of the gas inlet 41b. Specifically, an intake tube 114 forming the intake channel 115 is connected to the upstream end of the gas inlet 41b.

The exhaust port 41e is in communication with the combustion chamber 4r with the gas outlet 41f therebetween. The exhaust port 41e is curved and extends inside the cylinder head portion 41 in a downstream direction from the gas outlet 41f of the combustion chamber 4r. An end (a downstream end) of the exhaust port 41e, which is opposite to an end thereof adjacent to the gas outlet 41f, is open to the outer surface of the cylinder head portion 41. An exhaust channel 117 (see FIG. 17) is connected to an end (a downstream end) of the gas outlet 41f.

As illustrated in FIG. 1(A), an extending area Ae is defined as an area having the same width as the gas inlet 41b and extending from the gas inlet 41b in an intake direction Y1 when the cylinder part 4 is viewed in the reciprocating direction Z. The single center tumble port (SCTP) 41a and the gas inlet 41b are provided such that the extending area Ae covers the gas outlet 41f. According to the present embodiment, the intake direction Y1 is included in the direction Y.

In contrast to the extending area Ae, as illustrated in FIG. 1(A), a near-gas inlet area Ar is defined as an area extending from the gas inlet 41b in a direction opposite to the intake direction Y1 when the cylinder part 4 is viewed in the reciprocating direction Z. Of the ceiling part 41r of the combustion chamber 4r, at least a peripheral portion leading to the cylinder body portion 42 has a non-squish area NS in the near-gas inlet area Ar. The non-squish area NS is an area of the peripheral portion of the ceiling part 41r and is provided with no projecting part projecting toward the combustion chamber 4r. That is, the non-squish area NS is an area provided with no projecting part for producing a squish effect.

The cylinder head portion 41 and the piston part 5 are spaced in a direction along the central line Lc of the piston part 5, and the distance therebetween in the non-squish area NS continuously increases toward the center of the combustion chamber 4r in a radial direction of the combustion chamber 4r.

According to the present embodiment, the non-squish area NS is provided over the entire peripheral portion of the ceiling part 41r.

The fuel injector part 6 is attached to face toward the single center tumble port (SCTP) 41a. The fuel injector part 6 injects fuel into the single center tumble port (SCTP) 41a. The fuel injector part 6 injects the fuel from a location upstream of the gas inlet 41b. The fuel injector part 6 creates a gas mixture (hereinafter, referred to also simply as gas) by injecting the fuel into air supplied into the single center tumble port (SCTP) 41a. The gas includes the air and the fuel. The gas is supplied to the combustion chamber 4r through the gas inlet 41b.

The spark-ignition engine 1 operates at stoichiometry for combustion. The fuel injector part 6 injects the fuel such that the spark-ignition engine 1 operates at stoichiometry for combustion. The fuel injector part 6 injects the fuel to give an air-fuel ratio in a range of from 14.2 to 14.8. This is equivalent to an excess air ratio in a range of from 0.98 to 1.02. More specifically, in the spark-ignition engine 1, an oxygen content in exhaust gas is detected using, for example, an oxygen sensor, not shown, and the fuel is injected on the basis of the detected oxygen content such that the air-fuel ratio is in a range of from 14.2 to 14.8.

The offset ignition plug 7 is provided on the cylinder head portion 41. The offset ignition plug 7 has the offset ignition part 7a. The offset ignition plug 7 is inserted in a plug hole 41d formed in the cylinder part 4. The offset ignition part 7a is exposed to the combustion chamber 4r. The offset ignition part 7a ignites the gas in the combustion chamber 4r through spark ignition.

As illustrated in FIG. 1(A), the combustion chamber 4r is divided into two regions, a first region A1 and a second region A2, when viewed in the reciprocating direction Z. The first region A1 and the second region A2 are separated by a center passing line S passing through a center f of the gas outlet 41f and a center b of the gas inlet 41b. The offset ignition part 7a is disposed in the first region A1 without overlapping the center passing line S.

The gas inlet 41b is formed such that a distance between the gas inlet 41b and the gas outlet 41f along the center passing line S is shorter than a diameter of the offset ignition part 7a. As a result of the offset ignition part 7a being disposed without overlapping the center passing line S, it is possible for the gas inlet 41b to have a large diameter.

The intake valve 81 opens and closes the gas inlet 41b. The exhaust valve 82 opens and closes the gas outlet 41f.

The cylinder head portion 41 is provided with a rotatable camshaft 41s. The camshaft 41s has cams 41t, 41u, and 41v. The camshaft 41s and the cams 41t, 41u, and 41v are integrated and rotate in conjunction with the rotation of the crankshaft 2. A linear reciprocating motion of the exhaust valve 82 caused by operation of the cam 41t opens and closes the gas outlet 41f. A linear reciprocating motion of the intake valve 81 caused by operation of the cams 41u and 41v opens and closes the gas inlet 41b.

The intake valve 81 opens the gas inlet 41b when the piston part 5 moves toward the bottom dead center (a position represented by the dashed lines in FIG. 1(B)), so that a tumble flow is imparted to gas taken into the combustion chamber 4r through the single center tumble port (SCTP) 41a.

The intake valve 81 closes the gas inlet 41b later than the arrival of the piston part 5 at the bottom dead center to allow the spark-ignition engine 1 to have an effective compression ratio smaller than an expansion ratio thereof. The spark-ignition engine 1 includes a variable valve timing mechanism 43. The variable valve timing mechanism 43 changes the closing timing of the intake valve 81 in accordance with control by a controller part, not shown. Specifically, the variable valve timing mechanism 43 changes the closing timing of the intake valve 81 by switching the cam for driving the intake valve 81 between the cam 41u and the cam 41v.

The graph in FIG. 1(C) shows the valve timing of the intake valve 81. The horizontal axis of the graph in FIG. 1(C) represents crank angle and the vertical axis thereof represents amount of valve lift of the intake valve 81. "Intake TDC" means intake top dead center, and "Intake BDC" means intake bottom dead center.

The variable valve timing mechanism 43 switches the closing timing of the intake valve 81 between an intake bottom dead center timing, which is when the piston part is at the bottom dead center and is represented by a dashed line in the graph in FIG. 1(C), and a retarded timing, which is later than the intake bottom dead center timing and is represented by a solid line in the graph in FIG. 1(C).

The intake valve 81 closes the gas inlet 41b later than the arrival of the piston part 5 at the bottom dead center (intake BDC) as represented by the solid line in the graph in FIG. 1(C) to allow the spark-ignition engine 1 to have an effective compression ratio smaller than an expansion ratio thereof. This enables the spark-ignition engine 1 to achieve the Miller cycle.

The cylinder part 4 causes a tumble flow to be imparted to gas taken in through the single center tumble port (SCTP) 41a when the piston part 5 moves toward the bottom dead center by a distance corresponding to the stroke thereof longer than the diameter B of the combustion chamber 4r viewed in the reciprocating direction Z. Specifically, the cylinder part 4 has the cylinder bore 42b having a hollow cylindrical shape and accommodating the piston part 5. The cylinder part 4 and the piston part 5 define the combustion chamber 4r. In the cylinder part 4, the piston part 5 moves by a distance corresponding to the stroke St longer than the diameter B of the combustion chamber 4r. The gas taken in through the single center tumble port (SCTP) 41a flows mainly in a direction toward the exhaust valve 82, and then is guided to a wall surface of the cylinder bore 42b having a hollow cylindrical shape. A tumble flow is imparted to gas. The piston part 5 pushes the gas toward the top dead center as the piston part 5 moves toward the top dead center. The cylinder part 4 allows the gas being pushed by the piston part 5 as the piston part 5 moves toward the top dead center to flow toward the gas inlet 41b having the intake valve 81. The gas being pushed by the piston part 5 flows up toward the gas inlet 41b having the intake valve 81 by being guided by the wall surface of the cylinder bore 42b having a hollow cylindrical shape. A tumble flow is also imparted to gas. Details of the tumble flow will be described below.

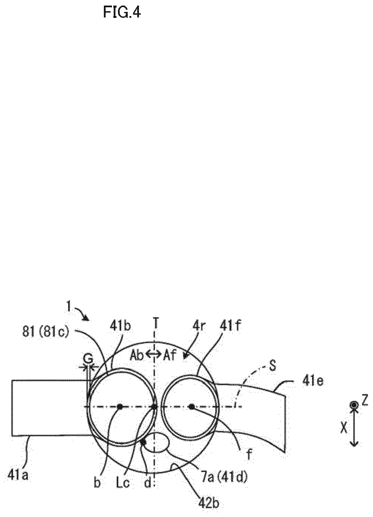

FIG. 4 is an enlarged view of the inside of the spark-ignition engine illustrated in FIG. 1(A).

FIG. 4 illustrates regions of the combustion chamber 4r in a different view from FIG. 1(A). That is, as illustrated in FIG. 4, the combustion chamber 4r is divided into a region Ab including the gas inlet 41b and a region Af including the gas outlet 41f by a straight line T intersecting with the center passing line S at a right angle and passing through the center Lc of the cylinder bore 42b when viewed in the reciprocating direction Z of the piston part 5 (see FIGS. 1(A) to 1(C)). FIG. 4 also shows a center passing line passing through the center Lc of the cylinder bore when viewed in the reciprocating direction Z of the piston part 5.

According to the present embodiment, the gas inlet 41b on the single center tumble port (SCTP) 41a is large with respect to the cylinder bore 42b having a small diameter. Specifically, the gas inlet 41b is formed as described below. In a range of the center passing line S within the region Ab including the gas inlet 41b viewed in the reciprocating direction Z, a portion where the center passing line S and the gas inlet 41b overlap is longer than a portion where the center passing line S and the gas inlet 41b do not overlap within the region Ab.

Since the gas is supplied through the single center tumble port (SCTP) 41a having such a large gas inlet 41b to the cylinder part 4, it is possible for a fast tumble flow in the combustion chamber 4r to be imparted to gas.

In the example illustrated in FIG. 4, for example, the length of the portion where the center passing line S and the gas inlet 41b do not overlap is substantially 0. Specifically, the gas inlet 41b is located within the combustion chamber 4r and is in touch with the combustion chamber 4r when viewed in the reciprocating direction Z. The center Lc of the cylinder bore 42b is included within a range of the gas inlet 41b when viewed in the reciprocating direction Z.

According to the present embodiment, the intake valve 81 is disposed as described below. When the gas inlet 41b is closed by a valve surface part 81c of the intake valve 81, an end point on the valve surface part 81c that is close to the gas outlet 41f (a point coinciding with Lc in FIG. 4) is closer to the gas outlet 41f in a direction parallel with the center passing line S viewed in the reciprocating direction Z than an end point d on the plug hole 41d that is close to the gas inlet. This makes it possible to form a large gas inlet 41b.

The combustion chamber 4r has, for example, a diameter of greater than 40 mm and less than 60 mm. In this case, the length of the range of the center passing line S within the region Ab including the gas inlet 41b is longer than 20 mm and shorter than 30 mm. Of this length, the portion where the center passing line S and the gas inlet 41b overlap is longer than 20 mm and shorter than 30 mm. In the example illustrated in FIG. 4, the length of the portion where the center passing line S and the gas inlet 41b overlap in the range of the center passing line S within the region Ab including the gas inlet 41b is longer than 20 mm and shorter than 30 mm. However, the diameter of the combustion chamber 4r, the length of the range of the center passing line S within the region Ab including the gas inlet 41b, the length of the portion where the center passing line S and the gas inlet 41b overlap, and the length of the portion where the center passing line S and the gas inlet 41b do not overlap are not limited to the respective ranges described above.

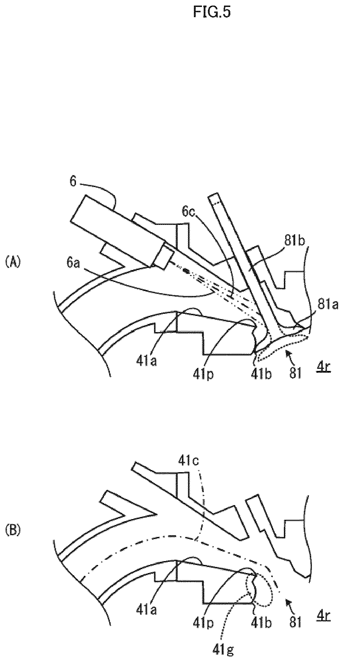

FIGS. 5(A) and 5(B) are each an enlarged cross-sectional view of the single center tumble port (SCTP) and a portion therearound of the spark-ignition engine illustrated in FIGS. 1(A) to 1(C). FIG. 5(A) illustrates positions of the intake valve 81 and the fuel injector part 6 in addition to the single center tumble port (SCTP). FIG. 5(B) is a cross-sectional view for only illustrating the single center tumble port (SCTP) 41a for visual clarity.

As described above, the spark-ignition engine 1 is provided with only one single center tumble port (SCTP) 41a. The single center tumble port (SCTP) 41a has an inner wall having an elongated hollow cylindrical shape.

The intake valve 81 has an umbrella part 81a and a stem part 81b. The umbrella part 81a is disk-shaped. The stem part 81b is column-shaped and connects to the umbrella part 81a. The intake valve 81 has the valve surface part 81c. The valve surface part 81c is a part of the umbrella part 81a. The valve surface part 81c faces toward the combustion chamber 4r. The valve surface part 81c has a circular shape. When the gas inlet 41b is closed by the intake valve 81, the valve surface part 81c covers the gas inlet 41b. When the gas inlet 41b is closed by the intake valve 81, there is no gap between the valve surface part 81c and the gas inlet 41b, allowing the valve surface part 81c, the cylinder part 4, and the piston part 5 to completely define the combustion chamber 4r.

The single center tumble port (SCTP) 41a has a structure that causes a tumble flow to be imparted to the gas taken into the combustion chamber 4r through the gas inlet 41b. Specifically, the inner wall of the single center tumble port (SCTP) 41a has a separation enhancing part 41p. The separation enhancing part 41p has a structure that causes the gas being flown to the gas inlet 41b to flow separate away from the wall surface leading to the gas inlet 41b so that a tumble flow is imparted to the gas taken into the combustion chamber 4r through the gas inlet 41b. More specifically, the separation enhancing part 41p has a structure that causes the gas to flow separate away at least from a portion 41g farthest from the gas outlet 41f (see FIGS. 1(A) to 1(C)), which is a portion of a perimeter of a circle defining the gas inlet 41b on the single center tumble port (SCTP) 41a. More specifically, the separation enhancing part 41p has a barb shape provided at least at the portion 41g that is located in an annular region adjacent to the gas inlet 41b within the wall surface forming the single center tumble port (SCTP) 41a and that is located farthest from the gas outlet 41f in a cross-section taken through the gas inlet 41b and the gas outlet 41f. The separation enhancing part 41p has a barb shape extending at a steep angle in a direction away from a central line 41c of the single center tumble port (SCTP) 41a. In other words, the separation enhancing part 41p has a barb shape extending at a steep angle in a direction away from the gas outlet 41f.

The separation enhancing part 41p is a protruding part protruding toward the internal space of the single center tumble port (SCTP) 41a. The separation enhancing part 41p is a protruding part stretching along the annular circumference of the inner wall in a region upstream of the gas inlet 41b in terms of the gas flow. That is, the separation enhancing part 41p stretches along the circumference of the gas inlet 41b. However, the separation enhancing part 41p does not span the whole circumference of the inner wall. The single center tumble port (SCTP) 41a has the separation enhancing part 41p at a portion farthest from the gas outlet 41f within an annular band region adjacent to the gas inlet 41b. The separation enhancing part 41p has an edge. The inner wall of the single center tumble port (SCTP) 41a illustrated in FIGS. 5(A) and 5(B) is therefore discontinuous at the separation enhancing part 41p in an extending direction of the single center tumble port (SCTP) 41a. The separation enhancing part 41p is at a right angle or an acute angle in the cross-section illustrated in FIGS. 5(A) and 5(B).

For example, the separation enhancing part 41p is at an acute angle in the cross-section illustrated in FIGS. 5(A) and 5(B).

Microscopically, the separation enhancing part 41p, which has a barb shape, does not necessarily have to have an edge such as illustrated in FIGS. 5(A) and 5(B).

The gas flowing in the single center tumble port (SCTP) 41a toward the gas inlet 41b while in contact with the wall surface flows separate away from the wall surface at the separation enhancing part 41p. The gas is not able to flow along a barb shape extending at a steep angle. That is, the flow in the direction away from the gas outlet 41f decreases. Consequently, of the flow of gas being taken into the combustion chamber 4r through a gap between the gas inlet 41b and the intake valve 81, a portion flowing in a direction from the gas inlet 41b toward the gas outlet 41f is faster than a portion flowing in any other direction. A tumble flow is imparted to the flow in the direction from the gas inlet 41b toward the gas outlet 41f in the combustion chamber 4r. Details of the tumble flow will be described below.

The spark-ignition engine 1 is a port fuel injection engine. The fuel injector part 6 is disposed to inject the fuel toward the gas inlet 41b on the single center tumble port (SCTP) 41a. The fuel injector part 6 injects atomized fuel in a conical injection range 6a. The density of the fuel being injected increases with the decreasing distance from a center 6c of the injection range. The density of the fuel is the highest at the center 6c of the injection range 6a.

The fuel injector part 6 is disposed such that the center 6c of the injection range 6a of the fuel does not intersect with the separation enhancing part 41p of the single center tumble port (SCTP) 41a. The fuel injector part 6 is disposed such that the center 6c of the injection range of the fuel intersects with the stem part 81b of the intake valve 81. The center 6c of the injection range 6a at which the density of the fuel is the highest does not intersect with the separation enhancing part 41p. Thus, the fuel is prevented from attaching to the separation enhancing part 41p and being condensed at and around the separation enhancing part 41p. As a result, intermittent injection of a large mass (droplet) of condensed fuel into the combustion chamber 4r is reduced. This reduces unintended intermittent changes in fuel supply from the single center tumble port (SCTP) 41a. The thermal efficiency therefore improves.

More specifically, the fuel injector part 6 is disposed such that the injection range 6a does not intersect with the separation enhancing part 41p of the single center tumble port (SCTP) 41a. Thus, the fuel is further prevented from attaching to the separation enhancing part 41p and being condensed at and around the separation enhancing part 41p. The thermal efficiency therefore further improves.

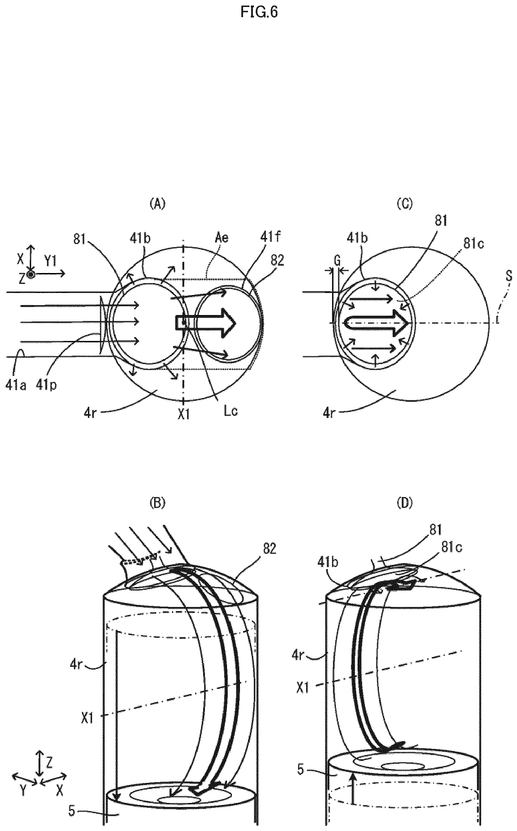

FIGS. 6(A) to 6(D) schematically illustrate the flow of the gas mixture in the combustion chamber of the spark-ignition engine illustrated in FIGS. 1(A) to 1(C). FIG. 6(A) is a plan view of an intake stroke, and FIG. 6(B) is a perspective view of the intake stroke. FIG. 6(C) is a plan view of a compression stroke, and FIG. 6(D) is a perspective view of the compression stroke.

As illustrated in FIGS. 6(A) and 6(B), the piston part 5 on the intake stroke moves from the top dead center toward the bottom dead center. On the intake stroke, meanwhile, the intake valve 81 keeps the gas inlet 41b open. As a result, the gas flows into the combustion chamber 4r through the single center tumble port (SCTP) 41a and the gas inlet 41b.

As illustrated in FIG. 6(A), the extending area Ae extending from the gas inlet 41b in the intake direction Y1 when viewed in the reciprocating direction Z covers the gas outlet 41f. As illustrated in FIG. 6(A), therefore, most of the gas introduced into the combustion chamber 4r through the gas inlet 41b after having flowed through the single center tumble port (SCTP) 41a in the intake direction Y1 flows particularly in a direction toward the position of the gas outlet 41f, which in other words is the intake direction Y1, because of the structure of the single center tumble port (SCTP) 41a. More specifically, the separation enhancing part 41p causes the gas flowing within the single center tumble port (SCTP) 41a to flow separate away from the wall surface of the single center tumble port (SCTP) 41a. Consequently, of the flow of gas being taken into the combustion chamber 4r through the annular gap between the gas inlet 41b and the intake valve 81, a portion flowing in the direction from the gas inlet 41b toward the gas outlet 41f is faster and larger in volume than a portion flowing in any other direction as illustrated in FIG. 6(A). This fast flow is represented by thick arrows in FIGS. 6(A) to 6(D). Most of the gas introduced into the combustion chamber 4r through the gas inlet 41b flows along a valve surface part of the exhaust valve 82, and then flows toward the bottom dead center of the piston part 5 while being taken by the piston part 5. As a result, a tumble flow is imparted to the gas in the combustion chamber 4r. The tumble flow is a vortex whirling around an axis X1 extending in the direction intersecting with the reciprocating direction Z. In an example of the present embodiment illustrated in FIGS. 6(A) to 6(D), the axis X1 is substantially parallel with the crankshaft direction X. However, the flow in the combustion chamber 4r may include a swirling flow, which is a vortex whirling around the central line Lc, in addition to the tumble flow. In this case, the axis being a component of the tumble flow is not substantially parallel with the crankshaft direction X. Note that the valve surface part is a planar portion that faces toward the combustion chamber.

The spark-ignition engine 1 includes only one gas inlet 41b on the single center tumble port (SCTP) 41a and only one gas outlet 41f on the exhaust port 41e. Unlike an engine having three or more gas inlets and gas outlets, for example, the only one gas inlet 41b and the only one gas outlet 41f are located such that the only one gas inlet 41b and the only one gas outlet 41f overlap a common diameter of the combustion chamber 4r when viewed in the reciprocating direction Z. That is, the only one gas inlet 41b and the only one gas outlet 41f are disposed on a straight line passing through the central line Lc of the combustion chamber 4r and extending in parallel with the intake direction Y1 when viewed in the reciprocating direction Z. The gas flowing around the central line Lc therefore has the highest flow rate in the gas introduced into the combustion chamber 4r through the gas inlet 41b.

The gas inlet 41b of the spark-ignition engine 1 is large compared to the engine including a plurality of gas inlets, for example. This helps create a wide gas flow in the direction from the gas inlet 41b toward the gas outlet 41f when viewed in the reciprocating direction Z. Of the gas flow, a central portion flowing around the central line Lc has the highest flow rate.

The offset ignition part 7a (see FIGS. 1(A) to 1(C)) of the spark-ignition engine 1 is disposed in the first region A1 of the combustion chamber without overlapping the center passing line S. The gas inlet 41b is therefore large compared to a configuration in which the ignition part is disposed in the center of the combustion chamber 4r, for example, when viewed in the reciprocating direction Z. This also helps create a wide gas flow in the direction from the gas inlet 41b toward the gas outlet 41f.

As described above, the gas introduced into the combustion chamber 4r through the gas inlet 41b creates a wide tumble flow having a high flow rate in the central portion thereof in a width direction (a direction along the axis X1 according to the present embodiment).

In comparison to a configuration including a plurality of gas inlets, for example, the spark-ignition engine 1 has the gas inlet 41b that is larger than each of the plurality of gas inlets. However, the area of the gas inlet 41b is smaller than the total area of the gas inlets in the configuration including the plurality of gas inlets, for example. Since the flow rate of gas passing through an opening increases with a decrease in area of the opening, a fast tumble flow is imparted to the gas passing through the gas inlet 41b on the single center tumble port (SCTP) 41a compared to gas in the configuration including the plurality of gas inlets.

As described above, as illustrated in FIG. 6(B), a wide tumble flow having the highest flow rate in the central portion thereof in the width direction is imparted to gas in the combustion chamber 4r. The tumble flow having the highest flow rate in the central portion thereof is imparted to gas by the piston part 5 moving by a distance corresponding to the stroke St longer than the diameter B of the combustion chamber 4r. The tumble flow having the highest flow rate in the central portion thereof in the width direction helps reduce flow disturbances. Such a tumble flow tends to maintain its rate for a long period of time.

On the compression stroke following the intake stroke, the piston part 5 moves toward the top dead center as illustrated in FIG. 6(D). That is, the piston part 5 moves upward from the bottom dead center. The gas comes out through the gas inlet 41b, flows along the valve surface part of the exhaust valve 82, and then flows toward the piston part 5 on the intake stroke as illustrated in FIG. 6(B). The gas is then pushed by the piston part 5 on the compression stroke as illustrated in FIG. 6(D). Being pushed by the piston part 5, the gas flows toward the gas inlet 41b. This maintains the tumble flow. The stroke St by which the piston part 5 moves is longer than the diameter B of the combustion chamber 4r. Accordingly, the piston part 5 moves at a high speed on the compression stroke. The fast tumble flow is therefore easily maintained by the gas pushed by the piston part 5.

The tumble flow in the combustion chamber 4r is a vortex. Of the vortex in the combustion chamber 4r, a fast-flowing portion is represented by arrows in FIGS. 6(B) and 6(D). Of the tumble flow in the combustion chamber 4r, a portion flowing toward the gas inlet 41b, which in other words is a portion flowing upward in a direction opposite to the piston part 5, is represented by an arrow in FIG. 6(D). A central portion of such an upward flow toward the intake valve 81 hits the valve surface part 81c of the only one intake valve 81 corresponding to the only one single center tumble port (SCTP). That is, the valve surface part 81c of the intake valve 81 is disposed so as to block the central portion of the upward flow toward the gas inlet 41b in the tumble flow.

Furthermore, the valve surface part 81c of the intake valve 81 is disposed as described below. When the gas inlet 41b is closed by the valve surface part 81c of the intake valve 81, the end point on the valve surface part 81c that is close to the gas outlet 41f (the point coinciding with Lc in FIG. 4) is closer to the gas outlet 41f in the direction parallel with the center passing line S viewed in the reciprocating direction Z than the end point d on the plug hole 41d that is close to the gas inlet as illustrated in FIG. 4. This allows the valve surface part 81c to be large.

A portion of the upward flow toward the gas inlet 41b escapes from the combustion chamber 4r through the entire gap between the periphery of the intake valve 81 (valve surface part 81c) and the gas inlet 41b as illustrated in FIG. 6(C). However, the central portion of the upward flow hits the large valve surface part 81c and continues to flow along the valve surface part 81c within the combustion chamber. That is, escape of the gas flowing around the central line Lc of the combustion chamber 4r viewed in the reciprocating direction Z is reduced. The high flow rate is therefore easily maintained around the central line Lc.

A tumble flow having a tumble ratio of greater than 0.3 within the cylinder part 4 is imparted to the single center tumble port (SCTP) 41a of the spark-ignition engine 1.

The tumble ratio is an indicator of the strength of the tumble flow. The tumble ratio is an indicator of the rate of the tumble flow.

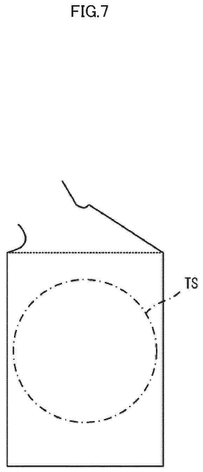

FIG. 7 is a diagram for explaining a method for calculating the tumble ratio. FIG. 7 schematically illustrates an internal structure of the cylinder part 4.

A space referred to as a tumble sphere TS is defined within the cylinder part 4 in the calculation of the tumble ratio. The angular velocity of the gas in a sphere of the tumble sphere TS is used to calculate the tumble ratio.

In comparison to a configuration including a plurality of gas inlets, for example, the two-valve configuration has the gas inlet 41b that is larger than each of the plurality of gas inlets. The valve surface part 81c of the intake valve 81 for closing the gas inlet 41b is also large, for example. A distance G from an edge of the valve surface part 81c to the wall surface of the combustion chamber 4r in the direction along the center passing line S passing through the center f (see FIG. 4) of the gas outlet 41f and the center b (see FIG. 4) of the gas inlet 41b when viewed in the reciprocating direction Z is therefore shorter than in the configuration including the plurality of gas inlets, for example.

When viewed in the direction along the axis X1 around which the tumble flow whirls, the upward flow toward the gas inlet 41b flows along the cylindrical wall surface of the combustion chamber 4r. Since the distance G from the edge of the valve surface part 81c to the wall surface of the combustion chamber 4r is short as described above, the central portion of the upward flow toward the gas inlet 41b directly hits the valve surface part 81c before hitting the ceiling of the combustion chamber 4r to change its direction. As a result, the gas of the central portion of the flow is prevented from escaping out of the combustion chamber 4r through the gas inlet 41b. That is, escape of the gas creating the fast flow in the central portion is reduced. The fast tumble flow is therefore easily maintained even if the closing of the gas inlet 41b by the intake valve 81 is later than the arrival of the piston part 5 at the bottom dead center ("Intake BDC" in FIG. 1(C)). A tumble flow being imparted to gas having a tumble ratio of greater than 0.3 further reduces the time required for gas combustion.

Furthermore, as illustrated in FIG. 1(A), at least the peripheral portion of the ceiling part 41r of the combustion chamber 4r has the non-squish area NS in the near-gas inlet area Ar. This helps reduce disturbances to the tumble flow in the combustion chamber 4r.

As described above, the fast tumble flow is maintained even if the closing of the intake valve is retarded in the spark-ignition engine 1 having only one single center tumble port (SCTP) 41a (see FIG. 1(A) to 1(C)) and only one intake valve 81.

Upon spark-ignition, the fast tumble flow in the combustion chamber 4r turns into a fast turbulent flow. As a result, flame propagates within a short period of time.

Furthermore, the diameter B of the combustion chamber 4r is shorter than the stroke St of the reciprocating motion of the piston part 5 when viewed in the reciprocating direction Z. The shorter diameter B reduces the flatness of the combustion chamber 4r defined by the piston part 5 when the piston part 5 is at the top dead center. Accordingly, the maximum flare propagation distance for flame to propagate after ignition by the offset ignition part 7a is reduced. This also reduces the combustion time.

The offset ignition part 7a of the spark-ignition engine 1 is disposed in a position offset from the center of the combustion chamber 4r when viewed in the reciprocating direction Z. However, the spark-ignition engine 1 according to the present embodiment reduces the influence of the offset position of the offset ignition part 7a on the combustion time through the fast tumble flow and the reduced maximum flare propagation distance.

As described above, since the fast tumble flow is maintained in the combustion chamber and the flare propagation distance is reduced, the time required for gas combustion is reduced. The reduction in time required for combustion improves the thermal efficiency of the spark-ignition engine 1.

The reduction in time required for combustion reduces the occurrence of knocking in the spark-ignition engine 1. The fact that the spark-ignition engine 1 is a water-cooled engine also reduces the occurrence of knocking. It is therefore possible to set the effective compression ratio of the spark-ignition engine 1 to a higher level than that of a conventional engine while reducing the occurrence of knocking. As a result, the thermal efficiency of the spark-ignition engine 1 further improves.

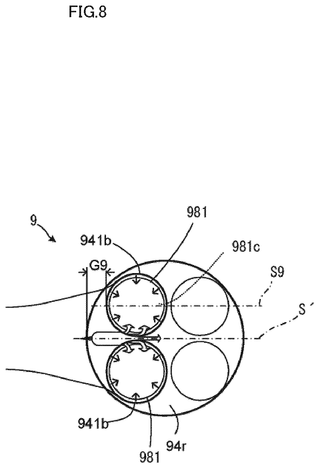

FIG. 8 is a plan view for explaining escape of gas in a four-valve spark-ignition engine being a comparative example on the compression stroke.

An engine 9 according to the comparative example illustrated in FIG. 8 includes four valves. The engine 9 includes two gas inlets 941b. A distance G9 from an edge of each valve surface part 981c to a wall surface of a combustion chamber 94r in a direction along a center passing line S9 is longer than the distance G (see FIG. 6(A) to 6(D)) in the present embodiment.

In the engine 9, as in the case of the present embodiment, the closing of intake valves 981 is retarded. In contrast to FIG. 6(C), FIG. 8 illustrates the intake valves 981 yet to be closed on the compression stroke after a piston part has arrived at the bottom dead center.

In the engine 9 according to the comparative example illustrated in FIG. 8, an upward flow toward each gas inlet 941b in a tumble flow flows along a cylindrical wall surface of a cylinder part as the piston part moves upward from the bottom dead center. Since the distance G9 from the edge of each valve surface part 981c to the wall surface of the combustion chamber 94r is long, a central portion of the flow hits a ceiling of the combustion chamber 94r to change its direction before hitting the valve surface part 981c. The central portion of the flow that has changed its direction flows in a direction along the valve surface part 981c. The central portion of the flow travels a longer distance than in the present embodiment illustrated in FIG. 6(C) while overlapping a gap between each intake valve 981 and the corresponding gas inlet 941b. The central portion of the flow therefore easily escapes out of the combustion chamber 94r through the gap between the intake valve 981 and the gas inlet 941b. The rate of the central portion of the flow therefore decreases. That is, the tumble flow tends to attenuate on the compression stroke due to the intake valves 981 being open. Each gap has an annular shape along the entire periphery of the corresponding valve surface part 981c. The two intake valves 981 are arranged side by side in a direction perpendicular to an intake direction as illustrated in FIG. 8. Of each gap, therefore, a portion that opens toward a center passing line S' (a portion that has a normal intersecting with the center passing line when viewed in a reciprocating direction of the piston part) is relatively large. This allows the central portion of the flow to easily escape, causing significant attenuation of the tumble flow. Similarly, in a configuration in which three or more intake valves are arranged side by side in the direction perpendicular to the intake direction, a portion of each gap that opens toward the center passing line is relatively large, causing significant attenuation of a tumble flow.

By contrast, the distance G in the spark-ignition engine 1 according to the present embodiment is short as illustrated in FIGS. 6(A) to 6(D). Furthermore, a portion of the gap between the intake valve 81 and the gas inlet 41b that opens toward the center passing line S is small. Specifically, the gap according to the present embodiment has substantially no portion that opens toward the center passing line S. The gas of the central portion of the flow is therefore prevented from escaping out of the combustion chamber 4r through the gas inlet 41b. This helps a faster tumble flow to be imparted to the gas. As described above, the behavior of the tumble flow in the combustion chamber is totally different between the configuration including the single center tumble port and the configuration including a plurality of intake ports.

The spark-ignition engine 1 according to the present embodiment achieves the Miller cycle allowing the effective compression ratio to be smaller than the expansion ratio by closing the gas inlet 41b later than the arrival of the piston part 5 at the bottom dead center. The Miller cycle improves the thermal efficiency. Furthermore, the tumble flow being maintained fast also improves the thermal efficiency.

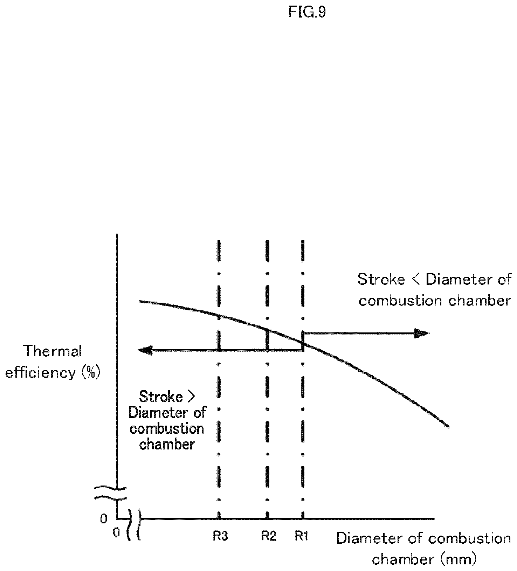

FIG. 9 is a graph showing a relationship between the diameter of a combustion chamber and the thermal efficiency of a spark-ignition engine.

FIG. 9 shows, as an example, a result of calculation of the thermal efficiency (indicated thermal efficiency) in a situation where the diameter of the combustion chamber and the stroke of a piston part are varied in a spark-ignition engine having a fixed stroke volume (displacement) of 0.15 L. Other than the diameter of the combustion chamber and the stroke of the piston part, the spark-ignition engine used for this simulation has the same configuration as the configuration illustrated in FIGS. 1(A) to 2. That is, the spark-ignition engine used for the calculation includes the single center tumble port (SCTP) 41a.

In a range in which the diameter of the combustion chamber is smaller than R1 in the graph in FIG. 9, which in other words is a range to the left of R1 in FIG. 9, the stroke of the piston part is longer than the diameter of the combustion chamber.

Note that in a range in which the diameter of the combustion chamber is smaller than R2 in the graph in FIG. 9, which in other words is a range to the left of R2 in FIG. 9, the stroke of the piston part is more than 1.2 times as long as the diameter of the combustion chamber.

In a range in which the diameter of the combustion chamber is smaller than R3 in the graph in FIG. 9, which in other words is a range to the left of R3 in FIG. 9, the stroke of the piston part is more than 1.5 times as long as the diameter of the combustion chamber.

As indicated in FIG. 9, the spark-ignition engine 1 including the single center tumble port (SCTP) 41a and the offset ignition part 7a achieves a higher thermal efficiency because the stroke St of the piston part is longer than the diameter B of the combustion chamber.

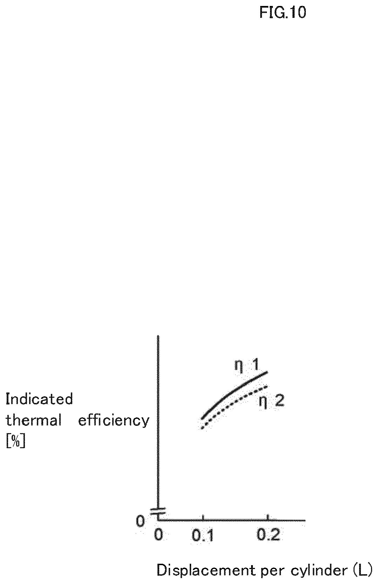

FIG. 10 is a graph showing a relationship between the stroke volume and the thermal efficiency of engines.

The graph in FIG. 10 shows the relationship between the stroke volume and the thermal efficiency of the engines under a constant compression ratio condition. The horizontal axis of the graph in FIG. 10 represents stroke volume of the engines. The stroke volume is a stroke volume (displacement) per cylinder. The vertical axis represents thermal efficiency (indicated thermal efficiency). A solid line η1 in the graph represents a simulation result of the thermal efficiency of an engine model that includes the single center tumble port (SCTP) according to the present embodiment. A dashed line η2 in the graph represents a simulation result of the thermal efficiency of an engine model that does not include the single center tumble port (SCTP).

According to the present embodiment, it is possible to inhibit a reduction in thermal efficiency of the spark-ignition engine 1 having a stroke volume of less than 0.2 L, whose thermal efficiency tends to decrease, through a configuration that facilitates the maintenance of the tumble flow. That is, the present embodiment achieves a higher thermal efficiency (η1) with a stroke volume of less than 0.2 L than a thermal efficiency (η2) of a configuration that does not adopt the single center tumble port (SCTP) 41a or the Miller cycle.

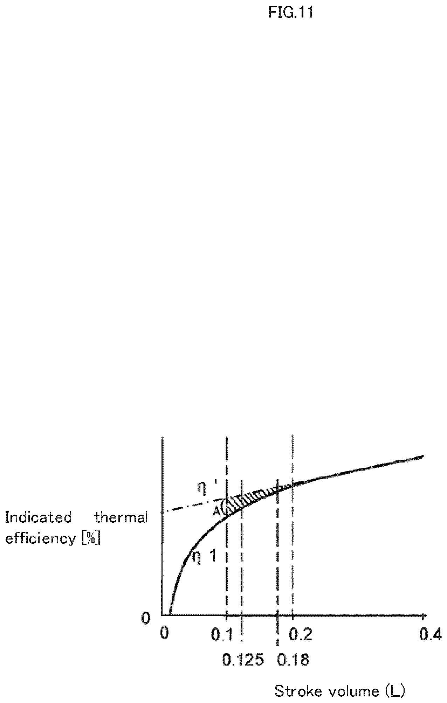

FIG. 11 is a graph showing a relationship between the stroke volume and the indicated thermal efficiency of a generic engine.

FIG. 11 shows, as a reference example, the stroke volume and the indicated thermal efficiency of the generic engine. The indicated thermal efficiency is a thermal efficiency determined without regard to mechanical loss. In the reference example, the stroke of a piston part is equal to the diameter of a combustion chamber.

The indicated thermal efficiency of a generic engine such as represented by the reference example shown in FIG. 11 tends to decrease with a decrease in size of the engine due to the relationship between the volume and the surface area. This is because the volume is closely related to the amount of heat generated, whereas the surface area is closely related to heat loss due to heat dissipation.

As indicated in FIG. 11, the decline of the indicated thermal efficiency with respect to the decline of the stroke volume accelerates where the stroke volume of the engine is less than 0.2 L. That is, the deviation from a straight line (a dashed and dotted line) η' representing a tendency in a large engine having, for example, a stroke volume of greater than or equal to 0.4 L is greater. The decline of the indicated thermal efficiency is significant where the stroke volume is less than 0.15 L. That is, the deviation from the straight line (dashed and dotted line ) η' is noticeable where the stroke volume is less than 0.2 L and becomes significant where the stroke volume is less than 0.18 L.

The spark-ignition engine 1 illustrated in FIGS. 1(A) to 9 achieves an improvement in indicated thermal efficiency even in a configuration in which the closing of the gas inlet 41b is earlier than the arrival of the piston part 5 at the bottom dead center, because a fast tumble flow is imparted to the gas taken into the cylinder part 4 through the single center tumble port (SCTP) 41a having the separation enhancing part 41p (see FIG. 5(A) and 5(B)). This improvement in indicated thermal efficiency can compensate for a reduction in indicated thermal efficiency due to downsizing of a generic engine to a stroke volume of 0.1 L. According to the configuration illustrated in FIGS. 1(A) to 10, therefore, it is possible to improve the thermal efficiency of a spark-ignition engine including the cylinder part 4 and the single center tumble port (SCTP) 41a with the separation enhancing part 41p and having a stroke volume of greater than or equal to 0.1 L and less than 0.2 L.

In a situation where a two-valve spark-ignition engine has a stroke volume of greater than or equal to 0.125 L, an improvement in indicated thermal efficiency resulting from the creation of a tumble flow is more than enough to compensate for a reduction in indicated thermal efficiency due to downsizing.

According to the configuration illustrated in FIGS. 1(A) to 9, it is possible to improve the thermal efficiency of a spark-ignition engine having a stroke volume of less than 0.2 L such as the engine shown as the reference example in which the decline of the thermal efficiency is particularly significant.

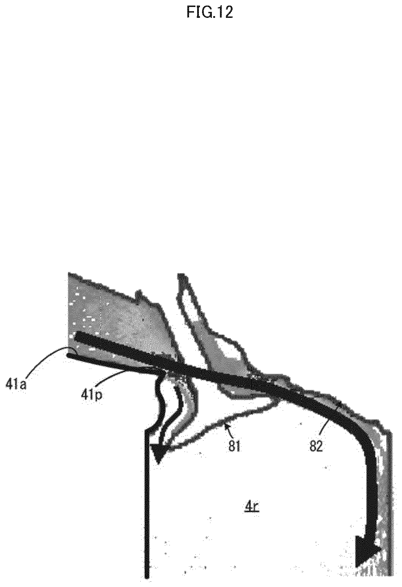

FIG. 12 is a diagram for explaining a gas flow in the spark-ignition engine 1 illustrated in FIGS. 1(A) to 9. FIG. 12 shows a simulation of a gas flow in the spark-ignition engine 1 illustrated in FIGS. 1(A) to 9 on the intake stroke. A denser portion (a darker portion) of a density representation indicates a higher flow rate.

The gas taken into the cylinder part 4 through the single center tumble port (SCTP) 41a easily flows separate away from the wall surface at the separation enhancing part 41p. The separated gas easily flows in the extending direction of the single center tumble port (SCTP) 41a. This increases the flow volume and the flow rate of the gas flowing toward the valve surface of the exhaust valve 82 in the gas taken into the combustion chamber 4r through the single center tumble port (SCTP) 41a.

By contrast, the volume and the flow rate of the gas taken into the combustion chamber 4r from a location farther from the exhaust valve 82 than the intake valve 81 decrease.

As a result, a fast tumble flow is imparted to the gas that flows along the valve surface of the exhaust valve 82, and then flows toward the piston part 5 (FIGS. 1(A) to 1(C)).

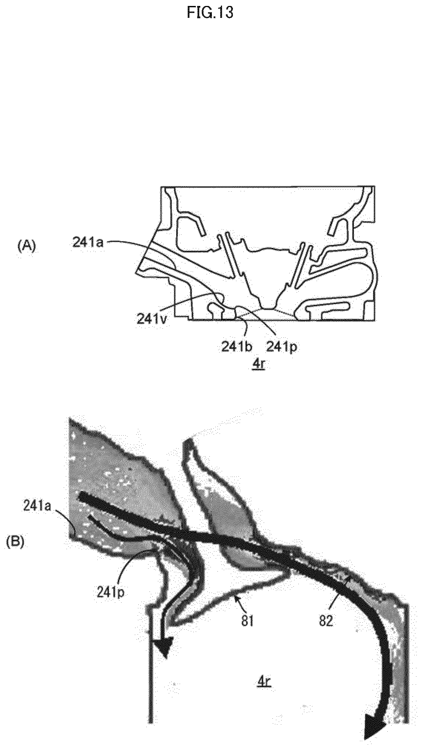

FIG. 13(A) illustrates a modification example of the port in the spark-ignition engine. FIG. 13(B) is a diagram for explaining a gas flow in the spark-ignition engine. FIG. 13(B) shows a result of a simulation of a gas flow on the intake stroke.

A single center tumble port (SCTP) 241a illustrated in FIG. 13(A) has a separation enhancing part 241p. The separation enhancing part 241p has a structure that causes gas being flown to a gas inlet 241b to flow separate away from a wall surface leading to the gas inlet 241b so that a tumble flow is imparted to the gas taken into the combustion chamber 4r (see FIGS. 5(A) and 5(B)) through the gas inlet 241b More specifically, the separation enhancing part 241p has a structure that causes the gas to flow separate away at least from a portion farthest from the gas outlet 41f (see FIGS. 1(A) to 1(C)), which is a portion of a perimeter of a circle defining the gas inlet 241b on the single center tumble port (SCTP) 241a. More specifically, the separation enhancing part 241p has a barb shape provided at least at the portion that is located in an annular band region adjacent to the gas inlet 241b within the wall surface forming the single center tumble port (SCTP) 241a and that is located farthest from the gas outlet 41f (see FIGS. 1(A) to 1(C)) in a cross-section taken through the gas inlet 241b and the gas outlet 41f. The separation enhancing part 241p has a barb shape extending at a steep angle in a direction away from a central line of the single center tumble port (SCTP) 241a. In other words, the separation enhancing part 241p has a barb shape extending at a steep angle in a direction away from the gas outlet 41f. The separation enhancing part 241p has a barb shape extending at a right angle or an acute angle in the cross-section taken through the gas inlet 241b and the gas outlet 41f (see FIGS. 1(A) to 1(C)). In a cross-section illustrated in FIG. 13(A), the separation enhancing part 241p has a barb shape extending substantially at a right angle. Microscopically, however, the separation enhancing part 241p does not have an edge and the barb shape thereof has a curved surface.

The separation enhancing part 241p protrudes toward the inside of the single center tumble port (SCTP) 241a. The single center tumble port (SCTP) 241a illustrated in FIG. 13(A) has a recessed part 241v located upstream of the separation enhancing part 241p in terms of the gas flow. The recessed part 241v is adjacent to the separation enhancing part 241p and has a curved surface in a cross-section taken along an extending direction of the single center tumble port (SCTP) 241a. Having the recessed part 241v adjacent thereto, the separation enhancing part 241p has a barb shape extending at a steep angle in the direction away from the gas outlet 41f.

The inner wall of the single center tumble port (SCTP) 241a is therefore substantially discontinuous at the separation enhancing part 241p in the extending direction of the single center tumble port (SCTP) 241a. The recessed part 241v and the separation enhancing part 241p cause the gas to flow separate away from the wall surface.

As illustrated in FIG. 13(B), the gas taken into the cylinder part 4 through the single center tumble port (SCTP) 241a easily flows separate away from the wall surface at the separation enhancing part 241p. The separated gas easily flows in the extending direction of the single center tumble port (SCTP) 241a. This increases the flow volume and the flow rate of the gas flowing toward the valve surface of the exhaust valve 82 in the gas taken into the combustion chamber 4r through the single center tumble port (SCTP) 241a. By contrast, the volume and the flow rate of the gas taken into the combustion chamber 4r from a location farther from the exhaust valve 82 than the intake valve 81 decrease.

As a result, a fast tumble flow is imparted to the gas that flows along the valve surface of the exhaust valve 82, and then flows toward the piston part 5 (FIGS. 1(A) to 1(C)).

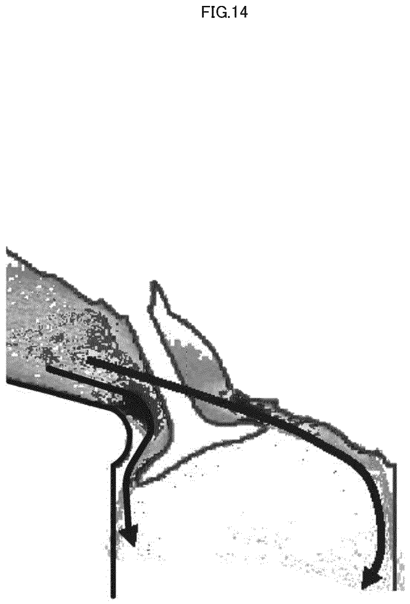

FIG. 14 is a diagram for explaining a gas flow in a comparative example.

A single center tumble port (SCTP) illustrated in FIG. 14 does not have the separation enhancing part 241p. Gas flowing through the single center tumble port (SCTP) does not easily flow separate away from the wall surface. As a result, the flow volume and the flow rate of the gas flowing toward the valve surface of the exhaust valve 82 are small in the gas taken into the combustion chamber 4r through the single center tumble port (SCTP) By contrast, the volume and the flow rate of the gas taken into the combustion chamber 4r from a location farther from the exhaust valve 82 than the intake valve 81 are larger than in the configuration illustrated in 5(B), for example.

As a result, a tumble flow that flows along the valve surface of the exhaust valve 82, and then flows toward the piston part 5 (FIGS. 1(A) to 1(C)) is slow.

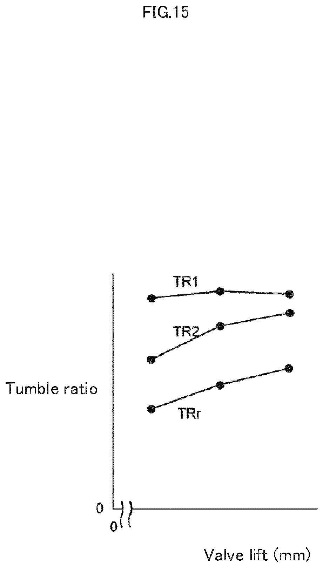

FIG. 15 is a graph showing tumble ratios in the configuration illustrated in FIG. 12, the configuration illustrated in FIGS. 13(A) and 13(B), and the configuration illustrated in FIG. 14, respectively.

"TR1" in the graph represents the tumble ratio in the configuration illustrated in FIG. 12. "TR2" represents the tumble ratio in the configuration illustrated in FIGS. 13(A) and 13(B). "TRr" represents the tumble ratio in the configuration of the comparative example illustrated in FIG. 14. The graph shows the tumble ratios corresponding to varied valve lifts of the intake valves 81.

In the configurations of the embodiment illustrated in FIGS. 12, and 13(A) and 13(B), a higher tumble ratio than that in the comparative example is obtained.

The following describes a spark-ignition engine according to a modification example of the first embodiment.

A spark-ignition engine 1 according to the present modification example is different from that according to the first embodiment described above in the profile of the cam 41u for driving the intake valve 81. Other than that, the modification example has the same configuration as the first embodiment. The modification example is therefore described using the drawings illustrating the first embodiment and the same reference signs as the first embodiment.

The intake valve 81 included in the spark-ignition engine 1 according to the modification example closes the gas inlet 41b earlier than the arrival of the piston part 5 at the bottom dead center to allow the spark-ignition engine 1 to have an effective compression ratio smaller than an expansion ratio thereof. This enables the spark-ignition engine 1 to achieve the Miller cycle.

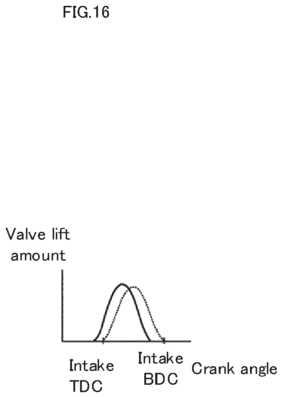

FIG. 16 is a graph for explaining operation of the spark-ignition engine according to the modification example of the first embodiment.

The horizontal axis of the graph represents crank angle and the vertical axis thereof represents amount of valve lift of the intake valve 81. "Intake TDC" means intake top dead center, and "Intake BDC" means intake bottom dead center. The variable valve timing mechanism 43 (see FIG. 1(B)) according to the modification example switches the closing timing of the intake valve 81 between an intake bottom dead center timing at the bottom dead center and is represented by a dashed line in the graph in FIG. 16, and an early timing, which is earlier than the intake bottom dead center timing and is represented by a solid line in the graph in FIG. 16.

In the spark-ignition engine 1 according to the modification example, the gas inlet 41b is closed earlier than the arrival of the piston part 5 at the bottom dead center. This early closing enables the spark-ignition engine 1 to achieve the Miller cycle.

In this case, attenuation of the tumble flow due to the gas inlet being open on the compression stroke, which is described in association with the first embodiment, does not occur. However, in the case of the early closing, the gas inlet is open for a short period of time on the intake stroke. The volume of gas to be taken into the combustion chamber 4r therefore decreases. If the cam is formed into a profile for increasing the lift of the intake valve 81 to increase the volume of gas, for example, the operation of the intake valve 81 can fail to keep up with a short-time change in the cam surface. Thus, increasing the lift of the intake valve 81 has a limit. In the case of the early closing, therefore, the volume of gas to be taken into the combustion chamber 4r decreases.

Since the volume of gas to be taken into the combustion chamber 4r on the intake stroke decreases in the case of the early closing as described above, the flow rate of the tumble flow imparted to the gas in the combustion chamber 4r tends to be low.

However, the spark-ignition engine 1 according to the modification example has the two-valve configuration including only one single center tumble port (SCTP) 41a. In comparison to an engine including a plurality of gas inlets, for example, the modification example has the gas inlet 41b that has a smaller area than a total area of the plurality of gas inlets, as in the case of the first embodiment. The gas therefore passes through the gas inlet 41b on the single center tumble port (SCTP) 41a at a high flow rate. And a fast tumble flow in the combustion chamber 4r is imparted to the gas.

As a result, the fast tumble flow is maintained in the combustion chamber 4r even in the configuration in which the closing timing of the intake valve 81 is earlier than the arrival of the piston part 5 at the bottom dead center.

The spark-ignition engine 1 according to the present embodiment achieves the Miller cycle allowing the effective compression ratio to be smaller than the expansion ratio by closing the gas inlet 41b earlier than the arrival of the piston part 5 at the bottom dead center. The Miller cycle improves the thermal efficiency. Furthermore, the tumble flow being maintained fast also improves the thermal efficiency.

FIG. 17 is a side view illustrating a straddled vehicle with the spark-ignition engine illustrated in FIGS. 1(A) to 1(C) mounted therein.

The straddled vehicle 100 illustrated in FIG. 17 includes a vehicle body 102, and vehicle wheels 103a and 103b. Specifically, the straddled vehicle 100 is a motorcycle. The straddled vehicle 100 is a scooter-type vehicle. The rear vehicle wheel 103b is a drive wheel. The vehicle body 102 is provided with a frame 104. The frame 104 includes a down frame 104a.

The straddled vehicle 100 also includes an acceleration command part 108. The acceleration command part 108 is an operation element for instructing acceleration of the straddled vehicle 100 according to manipulation thereof. The acceleration command part 108 shifts according to manipulation thereof. The acceleration command part 108 is an accelerator grip.

The straddled vehicle 100 includes an engine unit EU1. The engine unit EU1 includes the spark-ignition engine 1, the intake channel 115, and a throttle body 116.

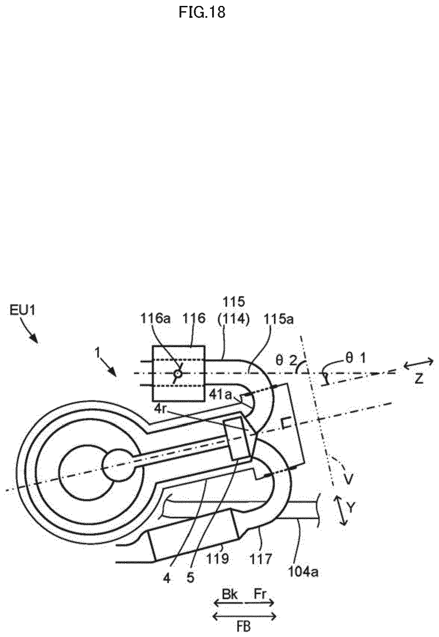

FIG. 18 schematically illustrates placement of the engine unit in the vehicle illustrated in FIG. 17.

A traveling direction of the straddled vehicle 100 with the engine unit EU1 mounted therein is referred to as a front direction Fr and a direction opposite to the front direction Fr is referred to as a back direction Bk. A direction including the front direction Fr and the back direction Bk is referred to as a front-back direction FB.

The engine unit EU1 includes the spark-ignition engine 1, the intake channel 115, the throttle body 116, the exhaust channel 117, and a catalyst unit 119.

The intake channel 115 is connected to the spark-ignition engine 1.

The throttle body 116 is provided midway in the intake channel 115. The intake channel 115 herein includes a gas channel in the throttle body 116. The throttle body 116 controls the flow volume of air being supplied to the spark-ignition engine 1. The throttle body 116 controls the volume of air being supplied to the spark-ignition engine 1 on the basis of the amount of manipulation of the acceleration command part 108.

Gas emitted from the spark-ignition engine 1 passes through the exhaust channel 117. The catalyst unit 119 is provided in the exhaust channel 117. The catalyst unit 119 purifies the gas passing through the exhaust channel 117.

The spark-ignition engine 1 is disposed in a sideways orientation in the straddled vehicle 100. That is, the spark-ignition engine 1 is disposed such that an angle between a horizontal plane and the reciprocating direction Z of the piston part 5 is smaller than an angle between a vertical plane perpendicular to the front-back direction FB and the reciprocating direction Z.

The intake channel 115 connects an air filter, not shown, and the spark-ignition engine 1. The intake channel 115 is in communication with the single center tumble port (SCTP) 41a of the spark-ignition engine 1. More specifically, the intake tube 114 included in the intake channel 115 connects the single center tumble port (SCTP) 41a and the throttle body 116. The intake channel 115 supplies gas to the single center tumble port (SCTP) 41a. More specifically, the intake channel 115 supplies air taken in through the air filter, not shown, to the single center tumble port (SCTP) 41a.

The throttle body 116 includes a throttle valve 116a. The throttle valve 116a adjusts the flow volume of the gas flowing through the intake channel 115. More specifically, the throttle valve 116a controls the volume of air flowing through the intake channel 115 on the basis of the amount of manipulation of the acceleration command part 108.

The throttle body 116 of the engine unit EU1 illustrated in FIG. 18 is disposed such that an angle θ1 between the reciprocating direction Z of the piston part 5 and a central line 115a of the intake channel 115 in the throttle body 116 is smaller than an angle θ2 between a plane V perpendicular to the reciprocating direction Z and the central line 115a. Furthermore, the throttle body 116 is disposed in a position overlapping the cylinder part 4 in the direction Y perpendicular to the reciprocating direction Z.

Furthermore, the catalyst unit 119 is disposed in a position overlapping the cylinder part 4 in the direction Y perpendicular to the reciprocating direction Z. That is, the catalyst unit 119 is disposed along the cylinder part 4. The catalyst unit 119 is disposed below the cylinder part 4 in a vertical direction in which the straddled vehicle 100 is in an upright state.

The engine unit EU1 is to be mounted in the straddled vehicle 100, and is therefore desired to be small-sized. The cylinder part 4 of the spark-ignition engine 1 included in the engine unit EU1 is, for example, disposed above the down frame 104a in the vertical direction. The intake channel 115 and the throttle body 116 included in the engine unit EU1 are also disposed above the down frame 104a.

Above the engine unit EU1, for example, a battery or a container part, not shown, is disposed. The engine unit EU1 is disposed in a limited space between the down frame 104a and the battery or the container part.

The combustion chamber 4r of the spark-ignition engine included in the engine unit EU1 illustrated in FIG. 18 has the diameter B shorter than the stroke St (see FIGS. 1(A) to 1(C)) of the reciprocating motion of the piston part 5 when viewed in the reciprocating direction Z. The cylinder part 4 defining the combustion chamber 4r therefore has a smaller size in a radial direction thereof than in a configuration in which the combustion chamber 4r has a diameter longer than the stroke, for example. This increases flexibility in the placement of the throttle body 116, which is disposed in a position overlapping the cylinder part 4.

Accordingly, in a configuration in which the throttle body 116 is disposed such that the angle θ1 between the reciprocating direction Z of the piston part 5 and the central line 115a of the intake channel is smaller than the angle θ2 between the plane V perpendicular to the reciprocating direction Z and the central line 115a as illustrated in FIG. 18, it is possible to dispose the intake channel 115 and the single center tumble port (SCTP) 41a along a curve having a low curvature. This configuration is therefore less likely to hinder creation of a fast tumble flow in the combustion chamber 4r. The fast tumble flow further improves the thermal efficiency.

Furthermore, the catalyst unit 119 is disposed in a position overlapping the cylinder part 4 in the direction Y perpendicular to the reciprocating direction Z. This allows the catalyst unit 119 to be disposed near the spark-ignition engine 1. As a result of the catalyst unit 119 being disposed near the spark-ignition engine 1, exhaust gas at a higher temperature is supplied to a catalyst in the catalyst unit 119, enabling the catalyst to produce its purification performance more effectively after engine starting, for example. However, if the catalyst unit 119 is disposed near the spark-ignition engine 1, an influence due to the resistance of the catalyst unit 119 on the flow of exhaust gas emitted from the spark-ignition engine is significant.

The catalyst unit 119 illustrated in FIGS. 17 and 18 is disposed in a position such that the engine unit EU1 of the straddled vehicle 100 can maintain a minimum ground clearance. The level at which the catalyst unit 119 is disposed therefore has a lowest limit. However, the cylinder part 4 has a smaller size in the radial direction thereof than in a configuration in which the cylinder part 4 has a diameter longer than the stroke, for example. This increases flexibility in the shape design of the catalyst unit 119. It is therefore possible to, for example, employ a large diameter for the catalyst unit 119, and thus to reduce the resistance of the catalyst unit 119 to the flow of the exhaust gas. In this case, as a result of the resistance to the flow of the exhaust gas being reduced, the thermal efficiency of the spark-ignition engine 1 improves.

The size of the cylinder part 4 being small in the radial direction thereof also increases flexibility in the placement of the spark-ignition engine 1 itself. For example, it is possible to dispose the spark-ignition engine 1 in a lower position in the vertical direction without changing the position and the shape of the catalyst unit 119. As a result, it is possible to dispose the intake channel 115 and the single center tumble port (SCTP) 41a along a curve having a low curvature. This configuration is therefore less likely to hinder creation of a fast tumble flow in the combustion chamber 4r. The fast tumble flow further improves the thermal efficiency.

As described above, according to the engine unit EU1 illustrated in FIG. 18, it is possible to improve the thermal efficiency while providing mountability into a vehicle.

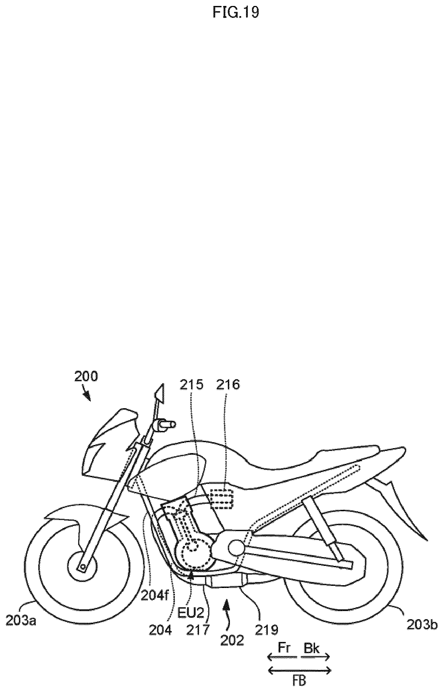

FIG. 19 is a side view illustrating a straddled vehicle of different type from that illustrated in FIG. 17.

A straddled vehicle 200 illustrated in FIG. 19 is a so-called street motorcycle. The straddled vehicle 200 includes a vehicle body 202, and vehicle wheels 203a and 203b. The vehicle body 202 is provided with a frame 204. The frame 204 has a front frame 204f.

The straddled vehicle 200 includes an engine unit EU2. The engine unit EU2 includes the spark-ignition engine 1, an intake channel 215, a throttle body 216, an exhaust channel 217, and a catalyst unit 219. The vehicle wheel 203b receives rotational power outputted from the spark-ignition engine 1, and thus drives the straddled vehicle 200.

The throttle body 216 controls the flow volume of air being supplied to the spark-ignition engine 1.

Gas emitted from the spark-ignition engine 1 passes through the exhaust channel 217. The catalyst unit 219 is provided in the exhaust channel 217.

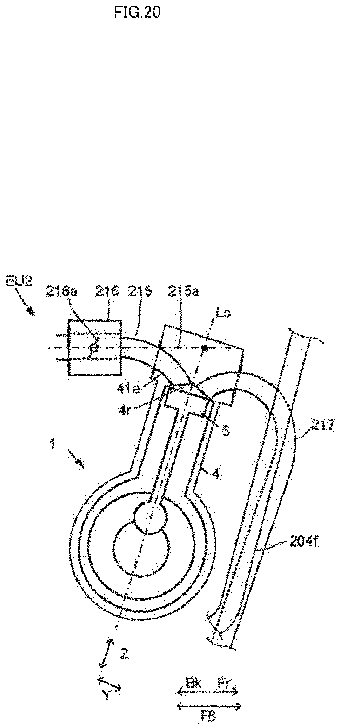

FIG. 20 schematically illustrates placement of the engine unit in the vehicle illustrated in FIG. 19.

The spark-ignition engine 1 is disposed in a longitudinal orientation in the straddled vehicle. That is, the spark-ignition engine 1 is disposed such that an angle between a horizontal plane and the reciprocating direction Z of the piston part 5 is larger than an angle between the reciprocating direction Z and a vertical plane in the straddled vehicle 200.

The front frame 204f is disposed further forward Fr than the spark-ignition engine 1 in the front-back direction FB in the straddled vehicle 200.

The throttle body 216 of the engine unit EU2 illustrated in FIG. 20 is disposed such that the central line Lc of the piston part 5 extending in the reciprocating direction Z of the piston part and a central line 215a of the intake channel 215 in the throttle body 216 intersect with each other.

The engine unit EU2 illustrated in FIG. 20 is disposed further backward Bk than the front frame 204f in the front-back direction FB. The combustion chamber 4r of the spark-ignition engine has the diameter B shorter than the stroke St (see FIGS. 1(A) to 1(C)) of the reciprocating motion of the piston part 5 when viewed in the reciprocating direction Z. The cylinder part 4 defining the combustion chamber 4r therefore has a smaller size in the radial direction thereof than in a configuration in which the combustion chamber 4r has a diameter longer than the stroke, for example. This increases flexibility in the placement of the throttle body 216, which is disposed such that the central line of the piston part 5 and the central line 215a of the intake channel 215 intersect with each other. It is possible to dispose the throttle body 216 in a position that is less likely to hinder creation of a fast tumble flow in the combustion chamber 4r. The thus fast tumble flow imparted to the gas further improves the thermal efficiency.

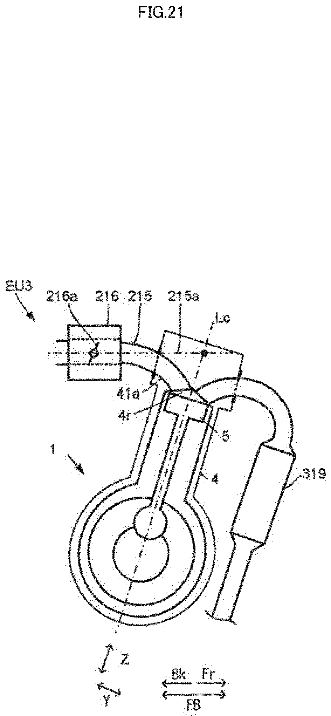

FIG. 21 schematically illustrates placement of another engine unit differing from that illustrated in FIG. 20.

A catalyst unit 319 of an engine unit EU3 illustrated in FIG. 21 is disposed in a different position from the catalyst unit 219 illustrated in FIG. 19. In order to clearly show the position of the catalyst unit 319, the front frame 204f is not shown. Other than that, FIG. 21 is the same as FIG. 20.

The catalyst unit 319 illustrated in FIG. 21 is disposed in a position overlapping the cylinder part 4 in the direction Y perpendicular to the reciprocating direction Z. That is, the catalyst unit 319 is disposed along the cylinder part 4. The catalyst unit 319 is disposed further forward Fr than of the cylinder part 4 in the front-back direction FB of the straddled vehicle in which the engine unit EU3 is mounted.

The engine unit EU3 illustrated in FIG. 21 is to be mounted in the straddled vehicle 200 (see FIG. 19), and is therefore desired to be small-sized as in the case of the engine unit EU2 illustrated in FIG. 20. For example, the engine unit EU3 is disposed at a distance from the front vehicle wheel 203a (see FIG. 19).

The combustion chamber 4r of the spark-ignition engine 1 included in the engine unit EU3 has the diameter B shorter than the stroke St (see FIGS. 1(A) to 1(C)) of the reciprocating motion of the piston part 5 when viewed in the reciprocating direction Z. The cylinder part 4 defining the combustion chamber 4r therefore has a smaller size in the radial direction thereof than in a configuration in which the combustion chamber 4r has a diameter longer than the stroke, for example. This increases flexibility in the placement of the catalyst unit 319, which is disposed in a position overlapping the cylinder part 4.

As a result of the catalyst unit 319 being disposed near the spark-ignition engine 1 in the engine unit EU3 illustrated in FIG. 21, a catalyst therein is able to produce its purification performance more effectively after engine starting, for example. Furthermore, the catalyst unit 319 is disposed along the cylinder part 4 of the spark-ignition engine 1 including the combustion chamber 4r having the diameter B shorter than the stroke St (see FIGS. 1(A) to 1(C)) of the reciprocating motion of the piston part 5. It is therefore possible to employ a large diameter for the catalyst unit 319, and thus to reduce the resistance to exhaust gas emitted from the spark-ignition engine 1 and passing through the catalyst unit 319. Since the resistance to the flow of the exhaust gas on the exhaust stroke is reduced, the thermal efficiency improves.

The present teaching is not limited to the examples described above and may adopt, for example, configurations described in (10) to (12) below. The embodiments described above may be mentioned as embodiments having the configurations described in (10) to (12) below.

(10) An engine unit including:
the spark-ignition engine described in (6) or (7);
an intake channel that is in communication with the single center tumble port and that supplies gas to the single center tumble port; and
a throttle body having a throttle valve that adjusts a flow volume of the gas flowing through the intake channel, wherein
the throttle body is disposed in a position overlapping the cylinder part in a direction perpendicular to the reciprocating direction of the piston part such that an angle between the reciprocating direction of the piston part and a central line of the intake channel in the throttle body is smaller than an angle between a plane perpendicular to the reciprocating direction of the piston part and the central line of the intake channel.

The combustion chamber of the spark-ignition engine included in the engine unit described in (10) has a diameter shorter than the stroke of the reciprocating motion of the piston part when viewed in the reciprocating direction. It is therefore possible to prevent the size of the cylinder part defining the combustion chamber from increasing in the radial direction thereof. This increases flexibility in the placement of the throttle body, which is disposed in a position overlapping the cylinder part. Accordingly, in a configuration in which the throttle body is disposed such that the angle between the reciprocating direction of the piston part and the central line of the intake channel is smaller than the angle between the plane perpendicular to the reciprocating direction of the piston part and the central line of the intake channel, it is possible to avoid placement of the intake channel in a position that hinders creation of a fast tumble flow. As a result, the Miller cycle allows the operation to achieve an improved thermal efficiency, and the fast tumble flow being maintained in the combustion chamber further improves the thermal efficiency.

(11) An engine unit including:
the spark-ignition engine described in (6) or (7);
an intake channel that is in communication with the single center tumble port and that supplies gas to the single center tumble port; and
a throttle body having a throttle valve that adjusts a flow volume of the gas flowing through the intake channel, wherein
the throttle body is disposed such that a central line of the piston part extending in the reciprocating direction of the piston part and a central line of the intake channel in the throttle body intersect with each other.

The combustion chamber of the spark-ignition engine included in the engine unit described in (11) has a diameter shorter than the stroke of the reciprocating motion of the piston part when viewed in the reciprocating direction. It is therefore possible to prevent the size of the cylinder part defining the combustion chamber from increasing in the radial direction thereof. This increases flexibility in the placement of the throttle body. Accordingly, in a configuration in which the throttle body is disposed such that the central line of the piston part and the central line of the intake channel intersect with each other, it is possible to avoid placement of the intake channel in a position that hinders creation of a fast tumble flow. As a result, the Miller cycle allows the operation to achieve an improved thermal efficiency, and the fast tumble flow being maintained in the combustion chamber further improves the thermal efficiency.

(12) An engine unit including:
the spark-ignition engine described in (6) or (7); and
a catalyst unit disposed in a position at least partially overlapping the cylinder part when viewed in a radial direction of the cylinder part, the catalyst unit containing a catalyst that purifies exhaust gas emitted from the combustion chamber of the spark-ignition engine.

The combustion chamber of the spark-ignition engine included in the engine unit described in (12) has a diameter shorter than the stroke of the reciprocating motion of the piston part when viewed in the reciprocating direction. It is therefore possible to dispose the catalyst unit in a position overlapping the cylinder part in the radial direction of the cylinder part while preventing the size of the cylinder part defining the combustion chamber from increasing in the radial direction thereof. As a result of the catalyst unit being disposed as described above, it is possible to reduce the distance between the combustion chamber and the catalyst in order that that exhaust gas at a higher temperature is supplied to the catalyst so that the catalyst produces its purification performance more effectively. The engine unit described in (12) above is suitably mounted in a vehicle, in particular in a straddled vehicle.

The straddled vehicle has, for example, the property of traveling with the attitude thereof being controlled through weight shifting of a rider, and turning while leaning toward the center of a curve. In general, it is not easy to change the seat height and the minimum ground clearance of the straddled vehicle, because the seat height and the minimum ground clearance are restricted by the above-described property. The engine unit described in (11) above is applied to such a straddled vehicle particularly suitably. According to the engine unit described in (12) above, it is possible to dispose the catalyst unit in a position overlapping the cylinder part in the radial direction of the cylinder part while preventing the size of the cylinder part from increasing in the radial direction thereof. It is therefore possible to dispose the catalyst unit so that the catalyst produces its purification performance more effectively while reducing a change in the seat height and/or the minimum ground clearance or without changing the seat height and/or the minimum ground clearance. The improvement in purification performance of the catalyst facilitates driving suitable for the thermal efficiency. This makes it possible to further improve the thermal efficiency.

### Reference Signs List

- 1: Spark-ignition engine
- 2: Crankshaft
- 4: Cylinder part
- 4r: Combustion chamber
- 5: Piston part
- 7: Offset ignition plug
- 7a: Offset ignition part
- 41: Cylinder head portion
- 42: Cylinder body portion
- 41a, 241a, 341a: Single center tumble port (SCTP)
- 41b: Gas inlet
- 41e: Exhaust port
- 41f: Gas outlet
- 81: Intake valve
- 82: Exhaust valve
- 81c: Valve surface part
- 100, 200: Straddled vehicle
- 115, 215: Intake channel
- 116, 216: Throttle body
- 116a: Throttle valve
- 117: Exhaust channel
- 119, 219, 319: Catalyst unit
- EU1, EU2, EU3: Engine unit
- NS: Non-squish area

## Claims

1. A spark-ignition engine (1) comprising:
a cylinder part (4) including a combustion chamber (4r);
a piston part (5) disposed in the cylinder part (4) in a reciprocable manner, the piston part (5) and the cylinder part (4) defining the combustion chamber (4r);
a crankshaft (2) coupled to the piston part (5), the crankshaft (2) being rotatable in conjunction with a reciprocating motion of the piston part (5);
one exhaust port (41e) provided on the cylinder part (4), the exhaust port (41e) being in communication with the combustion chamber (4r) with a gas outlet (41f) therebetween;
one single center tumble port (41a, 241a, 341a) provided on the cylinder part (4) and being in communication with the combustion chamber (4r) with a gas inlet (41b) therebetween, the single center tumble port (41a, 241a, 341a) having a separation enhancing part (41p, 241p) configured to cause gas being flown to the gas inlet (41b) to flow separate away from a wall surface thereof leading to the gas inlet (41b) so that a tumble flow tumbling about an axis (X1) that extends in a direction intersecting the reciprocating direction (Z) of the piston part (5) is imparted to gas taken into the combustion chamber (4r) through the gas inlet (41b), the gas inlet (41b) being disposed with an extending area (Ae) that covers the gas outlet (41f), the extending area (Ae) being defined as an area having the same width as the gas inlet (41b) and extending from the gas inlet (41b) in a gas intake direction when viewed in the reciprocating direction (Z) of the piston part (5);
an offset ignition plug (7) having an offset ignition part (7a) and configured to ignite the gas in the combustion chamber (4r) through spark ignition, the offset ignition part (7a) being disposed in a first region (A1) without covering a center passing line (S) passing through a center (f) of the gas outlet (41f) and a center (b) of the gas inlet (41b) when viewed in the reciprocating direction (Z), the first region (A1) being one of two regions (A1, A2) defined by dividing the combustion chamber (4r) along the center passing line (S);
one exhaust valve (82) configured to open and close the gas outlet (41f); and
one intake valve (81) configured to open and close the gas inlet (41b) disposed with the extending area (Ae) covering the gas outlet (41f), the intake valve (81) having a valve surface part (81c) that defines the combustion chamber (4r) together with the piston part (5) and the cylinder part (4) by closing the gas inlet (41b), wherein
the intake valve (81) is configured to open the gas inlet (41b) when the piston part (5) moves toward bottom dead center thereby to cause the tumble flow to be imparted to the gas taken into the combustion chamber (4r) through the single center tumble port (41a, 241a, 341a), **characterized in that** the intake valve is further configured to close the gas inlet (41b) earlier or later than arrival of the piston part (5) at the bottom dead center to allow the spark-ignition engine (1) to have an effective compression ratio smaller than an expansion ratio thereof,
wherein the separation enhancing part (41p, 241p) has a barb shape provided at least at a portion that is located in an annular region adjacent to the gas inlet (41b, 241b) within the wall surface forming the single center tumble port (41a, 241a) and that is located farthest from the gas outlet (41f) in a cross-section taken through the gas inlet (41b, 241b) and the gas outlet (41f, 241f), the barb shape extending at a steep angle in a direction away from a central line (41c) of the single center tumble port (41a, 241a) and in a direction away from the gas outlet (41f).

2. The spark-ignition engine (1) according to claim 1, wherein
the cylinder part (4) includes a cylinder head portion (41) provided with the exhaust port (41e) and the single center tumble port (41a, 241a, 341a) and forming a ceiling part (41r) of the combustion chamber (4r), and a cylinder body portion accommodating the piston part (5), and
of the ceiling part (41r), at least a peripheral portion leading to the cylinder body portion has a non-squish area (NS) in an area defined by supposing that the extending area (Ae) extends from the gas inlet (41b) in a direction opposite to the gas intake direction when viewed in the reciprocating direction (Z) of the piston part (5), the non-squish area (NS) being provided with no projecting part projecting toward the combustion chamber (4r).

3. The spark-ignition engine (1) according to claim 1 or 2, wherein
the intake valve (81) is configured to close the gas inlet (41b) later than the arrival of the piston part (5) at the bottom dead center.

4. The spark-ignition engine (1) according to claim 3, wherein
the valve surface part (81c) of the intake valve (81) is configured such that an end point on the valve surface part (81c) is closer to the gas outlet (41f) than an end point (d) on a plug hole (41d) in a direction parallel with the center passing line (S) when viewed in the reciprocating direction (Z), the plug hole (41d) formed to expose the offset ignition part (7a) to the inside of the combustion chamber (4r), the end point on the valve surface part (81c) being the closest point to the gas outlet (41f) thereon in said direction when the gas inlet (41b) is closed, the end point (d) on the plug hole (41d) being the closest point to the gas inlet (41b) thereon in said direction.

5. The spark-ignition engine (1) according to claim 1 or 2, wherein
the intake valve (81) is configured to close the gas inlet (41b) earlier than the arrival of the piston part (5) at the bottom dead center.

6. The spark-ignition engine (1) according to any one of claims 1 to 5, wherein
the combustion chamber (4r) has a diameter shorter than a stroke length of the reciprocating motion of the piston part (5) when viewed in the reciprocating direction (Z).

7. The spark-ignition engine (1) according to any one of claims 1 to 6, wherein
the cylinder part (4) has a stroke volume of greater than or equal to 0.1 L and less than 0.2 L.

8. A vehicle (100, 200) comprising:
the spark-ignition engine (1) according to any one of claims 1 to 7; and a vehicle wheel (103b, 203b) that is driven by the spark-ignition engine (1).

## Patentansprüche

1. Ein Funkenzündungsmotor (1), der folgende Merkmale aufweist:
ein Zylinderteil (4), das eine Verbrennungskammer (4r) umfasst;
ein Kolbenteil (5), das in dem Zylinderteil (4) sich hin- und herbewegend angeordnet ist, wobei das Kolbenteil (5) und das Zylinderteil (4) die Verbrennungskammer (4r) definieren;
eine Kurbelwelle (2), die mit dem Kolbenteil (5) gekoppelt ist, wobei die Kurbelwelle (2) in Verbindung mit einer Hin- und Herbewegung des Kolbenteils (5) drehbar ist;
eine Entströmungsöffnung (41e), die auf dem Zylinderteil (4) bereitgestellt ist, wobei die Entströmungsöffnung (41e) in Kommunikation mit der Verbrennungskammer (4r) mit einem Gasauslass (41f) dazwischen steht;
eine Einzelne-Mitte-Wirbelöffnung (41a, 241a, 341a), die auf dem Zylinderteil (4) bereitgestellt ist und in Kommunikation mit der Verbrennungskammer (4r) mit einem Gaseinlass (41b) dazwischen steht, wobei die Einzelne-Mitte-Wirbelöffnung (41a, 241a, 341a) ein Trennungsverstärkungsteil (41p, 241p) aufweist, das dazu konfiguriert ist, zu bewirken, dass Gas, welches zu dem Gaseinlass (41b) strömt, auf separate Weise weg von einer Wandoberfläche davon, welche zu dem Gaseinlass (41b) führt, zu strömen, so dass ein Wirbelstrom, der um eine Achse (X1) wirbelt, die sich in einer Richtung erstreckt, die die Hin- und Her-Richtung (Z) des Kolbenteils (5) schneidet, auf ein Gas angewendet wird, welches durch den Gaseinlass (41b) in die Verbrennungskammer (4r) gebracht wird, wobei der Gaseinlass (41b) mit einer Ausdehnungsfläche (Ae) angeordnet ist, die den Gasauslass (41f) abdeckt, wobei die Ausdehnungsfläche (Ae) als Fläche mit derselben Breite wie der Gaseinlass (41b) definiert ist und sich bei Betrachtung in der Hin- und Her-Richtung (Z) des Kolbenteils (5) in einer Gaseingangsrichtung von dem Gaseinlass (41b) erstreckt;
eine Versatzzündkerze (7), die ein Versatzzündteil (7a) aufweist und dazu konfiguriert ist, das Gas in der Verbrennungskammer (4r) durch eine Funkenzündung zu entzünden, wobei das Versatzzündteil (7a) in einem ersten Bereich (A1) angeordnet ist, ohne eine Mittelverlaufslinie (S) abzudecken, die bei Betrachtung in der Hin- und Her-Richtung (Z) die durch eine Mitte (f) des Gasauslasses (41f) und eine Mitte (b) des Gaseinlasses (41b) verläuft, wobei der erste Bereich (A1) einer von zwei Bereichen (A1, A2) ist, die durch ein Unterteilen der Verbrennungskammer (4r) entlang der Mittelverlaufslinie (S) definiert sind;
ein Entströmungsventil (82), das dazu konfiguriert ist, den Gasauslass (41f) zu öffnen und zu schließen; und
ein Eingangsventil (81), das dazu konfiguriert ist, den Gaseinlass (41b), der mit der Ausdehnungsfläche (Ae) angeordnet ist, die den Gasauslass (41f) abdeckt, zu öffnen und zu schließen, wobei das Eingangsventil (81) ein Ventiloberflächenteil (81c) aufweist, das die Verbrennungskammer (4r) gemeinsam mit dem Kolbenteil (5) und dem Zylinderteil (4) durch das Schließen des Gaseinlasses (41b) definiert, wobei
das Eingangsventil (81) dazu konfiguriert ist, den Gaseinlass (41b) zu öffnen, wenn das Kolbenteil (5) sich hin zu einem unteren Totpunkt bewegt, wodurch bewirkt wird, dass der Wirbelstrom auf das Gas angewendet wird, das durch die Einzelne-Mitte-Wirbelöffnung (41a, 241a, 341a) in die Verbrennungskammer (4r) gebracht wird, **dadurch gekennzeichnet, dass** das Eingangsventil ferner dazu konfiguriert ist, den Gaseinlass (41b) früher oder später als eine Ankunft des Kolbenteils (5) an dem unteren Totpunkt zu schließen, um zu ermöglichen, dass der Funkenzündungsmotor (1) eine effektives Kompressionsverhältnis aufweist, das kleiner ist als ein Ausdehnungsverhältnis desselben,
wobei das Trennungsverstärkungsteil (41p, 241p) eine Widerhakenform aufweist, die zumindest an einem Abschnitt bereitgestellt ist, der sich in einem ringförmigen Bereich benachbart zu dem Gaseinlass (41b, 241b) in der Wandoberfläche befindet, die die Einzelne-Mitte-Wirbelöffnung (41a, 241a) bildet, und der sich in einem Querschnitt, der durch den Gaseinlass (41b, 241b) und den Gasauslass (41f, 241f) angenommen wird, am weitesten entfernt von dem Gasauslass (41f) befindet, wobei die Widerhakenform sich in einem steilen Winkel in einer Richtung weg von einer Mittellinie (41c) der Einzelne-Mitte-Wirbelöffnung (41a, 241a) und in einer Richtung weg von dem Gasauslass (41f) erstreckt.

2. Der Funkenzündungsmotor (1) gemäß Anspruch 1, wobei
das Zylinderteil (4) einen Zylinderkopfabschnitt (41), der mit der Entströmungsöffnung (41e) und der Einzelne-Mitte-Wirbelöffnung (41a, 241a, 341a) versehen ist und ein Deckenteil (41r) der Verbrennungskammer (4r) bildet, und einen Zylinderkörperabschnitt aufweist, der das Kolbenteil (5) aufnimmt, und
von dem Deckenteil (41f) zumindest ein Umfangsabschnitt, der zu dem Zylinderkörperabschnitt führt, einen Nichtdrückbereich (NS) in einem Bereich aufweist, der dadurch definiert ist, das angenommen wird, dass sich die Ausdehnungsfläche (Ae) von dem Gaseinlass (41b) in einer Richtung entgegengesetzt zu der Gaseingangsrichtung erstreckt, bei Betrachtung in der Hin- und Her-Richtung (Z) des Kolbenteils (5), wobei die Nichtdrückfläche (NS) ohne einen hervorstehenden Teil, der hin zu der Verbrennungskammer (4r) hervorsteht, bereitgestellt ist.

3. Der Funkenzündungsmotor (1) gemäß Anspruch 1 oder 2, wobei
das Eingangsventil (81) dazu konfiguriert ist, den Gaseinlass (41b) später als zu der Ankunft des Kolbenteils (5) an dem unteren Totpunkt zu schließen.

4. Der Funkenzündungsmotor (1) mit Anspruch 3, wobei
das Ventiloberflächenteil (81c) des Einlassventils (81) derart konfiguriert ist, dass ein Endpunkt des Ventiloberflächenteils (81c) näher zu dem Gasauslass (41f) ist als ein Endpunkt (d) auf einem Kerzenloch (41d) in einer Richtung parallel zu der Mittelverlaufslinie (S) bei Betrachtung in der Hin- und Her-Richtung (Z), wobei das Kerzenloch (41d) dazu gebildet ist, das Versatzzündteil (7a) zum Inneren der Verbrennungskammer (4r) hin freizulegen, wobei der Endpunkt auf dem Ventiloberflächenteil (81c) der nächste Punkt zu dem Gasauslass (41f) darauf in der Richtung ist, wenn der Gaseinlass (41b) geschlossen ist, wobei der Endpunkt (d) auf dem Kerzenloch (41d) der nächste Punkt zu dem Gaseinlass (41b) darauf in der Richtung ist.

5. Der Funkenzündungsmotor (1) gemäß Anspruch 1 oder 2, wobei das Eingangsventil (81) dazu konfiguriert ist, den Gaseinlass (41b) früher als bei der Ankunft des Kolbenteils (5) an dem unteren Totpunkt zu schließen.

6. Der Funkenzündungsmotor (1) gemäß einem der Ansprüche 1 bis 5, wobei
die Verbrennungskammer (4r) einen Durchmesser aufweist, der kürzer ist als eine Hublänge der Hin- und Herbewegung des Kolbenteils (5) bei Betrachtung in der Hin- und Her-Richtung (Z).

7. Der Funkenzündungsmotor (1) gemäß einem der Ansprüche 1 bis 6, wobei
das Zylinderteil (4) ein Hubvolumen aufweist, das größer als oder gleich groß wie 0,1 L und kleiner als 0,2 L ist.

8. Ein Fahrzeug (100, 200), das folgende Merkmale aufweist:
den Funkenzündungsmotor (1) gemäß einem der Ansprüche 1 bis 7; und ein Fahrzeugrad (103b, 203b), das durch den Funkenzündungsmotor (1) angetrieben wird.

## Revendications

1. Moteur à allumage par étincelles (1), comprenant:
une partie de cylindre (4) comportant une chambre de combustion (4r);
une partie de piston (5) disposée en va-et-vient dans la partie de cylindre (4), la partie de piston (5) et la partie de cylindre (4) définissant la chambre de combustion (4r);
un vilebrequin (2) couplé à la partie de piston (5), le vilebrequin (2) pouvant tourner ensemble avec un mouvement de va-et-vient de la partie de piston (5);
un orifice d'échappement (41e) prévu sur la partie de cylindre (4), l'orifice d'échappement (41e) étant en communication avec la chambre de combustion (4r) avec une sortie de gaz (41f) entre eux;
un orifice de basculement central unique (41a, 241a, 341a) prévu sur la partie de cylindre (4) et étant en communication avec la chambre de combustion (4r) avec une entrée de gaz (41b) entre eux, l'orifice de basculement central unique (41a, 241a, 341a) présentant une partie d'amélioration de séparation (41p, 241p) configurée pour amener le gaz qui circule vers l'entrée de gaz (41b) à circuler en s'éloignant d'une surface de paroi de cette dernière conduisant vers l'entrée de gaz (41b) de sorte qu'un flux de basculement autour d'un l'axe (X1) qui s'étend dans une direction venant en intersection avec la direction de va-et-vient (Z) de la partie de piston (5) soit conféré au gaz admis dans la chambre de combustion (4r) à travers l'entrée de gaz (41b), l'entrée de gaz (41b) étant disposée avec une zone d'extension (Ae) qui couvre la sortie de gaz (41f), la zone d'extension (Ae) étant définie comme une zone présentant la même largeur que l'entrée de gaz (41b) et s'étendant à partir de l'entrée de gaz (41b) dans un direction d'admission de gaz, lorsque vue dans la direction de va-et-vient (Z) de la partie de piston (5);
une bougie d'allumage décalée (7) présentant une partie d'allumage décalée (7a) et configurée pour allumer le gaz dans la chambre de combustion (4r) par allumage par étincelles, la partie d'allumage décalée (7a) étant disposée dans une première région (A1) sans recouvrir une ligne de passage centrale (S) passant par un centre (f) de la sortie de gaz (41f) et un centre (b) de l'entrée de gaz (41b), lorsque vue dans la direction de va-et-vient (Z), la première région (A1) étant l'une de deux régions (A1, A2) définies en divisant la chambre de combustion (4r) le long de la ligne de passage centrale (S);
une soupape d'échappement (82) configurée pour ouvrir et fermer la sortie de gaz (41f); et
une soupape d'admission (81) configurée pour ouvrir et fermer l'entrée de gaz (41b) disposée avec la zone d'extension (Ae) couvrant la sortie de gaz (41f), la soupape d'admission (81) présentant une partie de surface de soupape (81c) qui définit la chambre de combustion (4r) ensemble avec la partie de piston (5) et la partie de cylindre (4) en fermant l'entrée de gaz (41b),
dans lequel
la soupape d'admission (81) est configurée pour ouvrir l'entrée de gaz (41b) lorsque la partie de piston (5) se déplace vers le point mort au fond pour amener ainsi le flux de basculement à être conféré au gaz admis dans la chambre de combustion (4r) à travers l'orifice de basculement central unique (41a, 241a, 341a),
**caractérisé par le fait que** la soupape d'admission est par ailleurs configurée pour fermer l'entrée de gaz (41b) plus tôt ou plus tard que l'arrivée de la partie de piston (5) au point mort au fond pour permettre que le moteur à allumage par étincelles (1) présente un taux de compression effectif de fond à un taux de détente de ce dernier,
dans lequel la partie d'amélioration de séparation (41p, 241p) présente une forme de barbelure prévue au moins au niveau d'une partie qui est située dans une région annulaire adjacente à l'entrée de gaz (41b, 241b) à l'intérieur de la surface de paroi formant l'orifice de basculement central unique (41a, 241a) et qui est située le plus loin de la sortie de gaz (41f) dans une section prise à travers l'entrée de gaz (41b, 241b) et la sortie de gaz (41f, 241f), la forme de barbelure s'étendant selon un angle abrupt dans une direction s'éloignant d'une ligne centrale (41c) de l'orifice de basculement central unique (41a, 241a) et dans une direction s'éloignant de la sortie de gaz (41f).

2. Moteur à allumage par étincelles (1) selon la revendication 1, dans lequel
la partie de cylindre (4) comporte une partie de culasse (41) pourvue de l'orifice d'échappement (41e) et de l'orifice de basculement central unique (41a, 241a, 341a) et formant une partie de plafond (41r) de la chambre de combustion (4r), et une partie de corps de cylindre abritant la partie de piston (5), et
de la partie de plafond (41r), au moins une partie périphérique conduisant à la partie de corps de cylindre présente une zone de non-écrasement (NS) dans une zone définie en supposant que la zone d'extension (Ae) s'étend à partir de l'entrée de gaz (41b) dans une direction opposée à la direction d'admission de gaz, lorsque vue dans la direction de va-et-vient (Z) de la partie de piston (5), la zone de non-écrasement (NS) n'étant pas pourvue d'une partie en saillie faisant saillie vers la chambre de combustion (4r).

3. Moteur à allumage par étincelles (1) selon la revendication 1 ou 2, dans lequel
la soupape d'admission (81) est configurée pour fermer l'entrée de gaz (41b) plus tard que l'arrivée de la partie de piston (5) au point mort au fond.

4. Moteur à allumage par étincelles (1) selon la revendication 3, dans lequel
la partie de surface de soupape (81c) de la soupape d'admission (81) est configurée de sorte qu'un point d'extrémité sur la partie de surface de soupape (81c) soit plus proche de la sortie de gaz (41f) qu'un point d'extrémité (d) sur un trou de bougie (41d) dans une direction parallèle à la ligne de passage centrale (S), lorsque vu dans la direction de va-et-vient (Z), le trou de bougie (41d) étant formé pour exposer la partie d'allumage décalée (7a) vers l'intérieur de la chambre de combustion (4r), le point d'extrémité sur la partie de surface de soupape (81c) étant le point le plus proche de la sortie de gaz (41f) sur cette dernière dans ladite direction lorsque l'entrée de gaz (41b) est fermée, le point d'extrémité (d) sur le trou de bougie (41d) étant le point le plus proche de l'entrée de gaz (41b) sur ce dernier dans ladite direction.

5. Moteur à allumage par étincelles (1) selon la revendication 1 ou 2, dans lequel
la soupape d'admission (81) est configurée pour fermer l'entrée de gaz (41b) plus tôt que l'arrivée de la partie de piston (5) au point mort au fond.

6. Moteur à allumage par étincelles (1) selon l'une quelconque des revendications 1 à 5, dans lequel
la chambre de combustion (4r) présente un diamètre plus court qu'une longueur de course du mouvement de va-et-vient de la partie de piston (5), lorsque vu dans la direction de va-et-vient (Z).

7. Moteur à allumage par étincelles (1) selon l'une quelconque des revendications 1 à 6, dans lequel
la partie de cylindre (4) présente un volume de course de plus de ou égal à 0,1 L et de moins de 0,2 L.

8. Véhicule (100, 200) comprenant:
le moteur à allumage par étincelles (1) selon l'une quelconque des revendications 1 à 7; et une roue de véhicule (103b, 203b) qui est entraînée par le moteur à allumage par étincelles (1).
